# EUROPEAN PATENT APPLICATION

(11) **EP 4 761 404 A1**
(43) Date of publication of application: **17.06.2026**
(21) Application number: 24858214.0
(22) Date of filing: 01.08.2024
(51) Int. Cl.: H04W 72/04

(54) **METHOD FOR TRANSMITTING CONTROL INFORMATION, AND COMMUNICATION APPARATUS**

(30) Priority: 30.08.2023 CN 202311116734
(71) Applicant: HUAWEI TECHNOLOGIES CO., LTD., Shenzhen, Guangdong 518129 (CN)
(72) Inventor: HUA, Meng, Shenzhen, Guangdong 518129 (CN); GAO, Fei, Shenzhen, Guangdong 518129 (CN); DING, Mengying, Shenzhen, Guangdong 518129 (CN)
(74) Representative: Goddar, Heinz J.
(86) International application number: PCT/CN2024/109228
(87) International publication number: WO 2025/044671

(57) **Abstract**

Embodiments of this application disclose a control information transmission method and a communication apparatus. To reduce a quantity of blind detections performed by a terminal device on DCI, the DCI may be carried on a PDSCH. To improve transmission performance of the DCI carried on the PDSCH, a position of a time domain symbol used for carrying the DCI on the PDSCH may be determined based on a position of a time domain symbol carrying a DMRS on the PDSCH.

## Description

This application claims priority to Chinese Patent Application No. 202311116734.1, filed with the China National Intellectual Property Administration on August 30, 2023 and entitled "CONTROL INFORMATION TRANSMISSION METHOD AND COMMUNICATION APPARATUS", which is incorporated herein by reference in its entirety.

### TECHNICAL FIELD

This application relates to the field of communication technologies, and in particular, to a control information transmission method and a communication apparatus.

### BACKGROUND

Network devices may carry downlink control information (downlink control information, DCI) on physical downlink control channels (physical downlink control channel, PDCCH), and the DCI may be used for scheduling physical downlink shared channels (physical downlink shared channel, PDSCH), physical uplink shared channels (physical uplink shared channel, PUSCH), or the like.

Currently, when the DCI is carried on the PDCCH, a terminal device performs blind detection on a large quantity of PDCCH candidates (candidates), causing high power consumption of the terminal device.

### SUMMARY

Embodiments of this application provide a control information transmission method and a communication apparatus, to reduce power consumption of receiving DCI by a terminal device, thereby improving transmission performance of the DCI.

To achieve the foregoing objective, the following technical solutions are used in embodiments of this application.

According to a first aspect, a control information transmission method is provided. The method includes: receiving indication information, where the indication information indicates a first time-frequency resource used for carrying a first downlink data channel, the first time-frequency resource includes a third time-frequency resource, and the third time-frequency resource is used for carrying a demodulation reference signal on the first downlink data channel; and receiving first downlink control information on a second time-frequency resource, where the second time-frequency resource is a part of resources in the first time-frequency resource, and the first downlink control information indicates a time-frequency resource used for carrying a second data channel; and the second time-frequency resource is determined based on an initial symbol of the first time-frequency resource, or the second time-frequency resource is determined based on the third time-frequency resource.

The first downlink data channel may be, for example, a PDSCH. The first downlink control information may be conventional DCI or second-stage DCI in two-stage DCI. The first downlink control information is used for scheduling an uplink channel or a downlink channel or for scheduling an uplink signal or a downlink signal.

When the first downlink control information indicates the time-frequency resource used for carrying the second data channel, the second data channel may be a PUSCH or a PDSCH.

Receiving the indication information and receiving the first downlink control information may be performed by a terminal device or a module (for example, a chip) in the terminal device.

In other words, in this application, the first time-frequency resource carrying the first downlink data channel not only carries the demodulation reference signal (demodulation reference signal, DMRS), but may also carry the first DCI. The second time-frequency resource carrying the first DCI is determined based on the first time-frequency resource carrying the first PDSCH or determined based on the third time-frequency resource carrying the DMRS in the first time-frequency resource. Considering that the downlink data channel is sent for the terminal device, in comparison with a conventional technology in which DCI is carried on a PDCCH, causing a problem that power consumption of a terminal device is high because the terminal device needs to blindly detect the DCI on a plurality of PDCCH candidates, in this application, the terminal device can also receive, on a time-frequency resource for receiving the first downlink data channel, the first DCI for scheduling the second data channel. This can avoid a problem of high power consumption caused by the terminal device blindly detecting the DCI on the plurality of PDCCH candidates. In addition, if the second time-frequency resource carrying the first DCI is determined based on the first time-frequency resource or the third time-frequency resource in the first time-frequency resource, the second time-frequency resource carrying the first DCI may be determined by comprehensively considering aspects such as a delay, channel estimation performance, and implementation complexity of the terminal device, thereby improving transmission performance of the DCI.

According to a second aspect, a control information transmission method is provided. The method includes: sending indication information, where the indication information indicates a first time-frequency resource used for carrying a first downlink data channel, the first time-frequency resource includes a third time-frequency resource, and the third time-frequency resource is used for carrying a demodulation reference signal on the first downlink data channel; and sending first downlink control information on a second time-frequency resource, where the second time-frequency resource is a part of resources in the first time-frequency resource, and the first downlink control information indicates a time-frequency resource used for carrying a second data channel; and the second time-frequency resource is determined based on an initial symbol of the first time-frequency resource, or the second time-frequency resource is determined based on the third time-frequency resource.

Sending the indication information and sending the first downlink control information may be performed by a network device or a module in the network device.

For beneficial effects of the second aspect, refer to descriptions of the first aspect.

In the first aspect and/or the second aspect, there are a plurality of the following possible designs.

In a possible design, there are N groups of demodulation reference signals in the demodulation reference signal on the first downlink data channel, where N is a positive integer; a time domain resource of the third time-frequency resource is N groups of symbols, and an n^{th} group of demodulation reference signals in the N groups of demodulation reference signals is carried on an n^{th} group of symbols in the N groups of symbols; and any group of the N groups of symbols consists of one symbol or two consecutive symbols, and when N is greater than or equal to 2, any two groups of the N groups of symbols are not consecutive in time domain, where n is a positive integer greater than or equal to 1 and less than or equal to N.

Herein, that there are N groups of DMRSs in the DMRS is because there may be a plurality of groups of DMRSs on the first PDSCH. Each group of DMRSs may occupy one or more consecutive symbols. If each group of DMRSs occupies one symbol, it may be understood as that the DMRS is in a single-symbol mode. If each group of DMRSs occupies two consecutive symbols, it may be understood as that the DMRS is in a double-symbol mode. If the DMRS carried on the first PDSCH is considered for a manner of carrying the first DCI on the first PDSCH, when a symbol carrying the first DCI is located between symbols carrying DMRSs, channel estimation for the first DCI may be obtained through interpolation of channel estimation for the DMRSs on two sides of the symbol carrying the first DCI; or when the DMRS exists on only one side of the symbol carrying the first DCI, channel estimation for the first DCI may be obtained through extrapolation of channel estimation for the DMRS on the side of the symbol carrying the first DCI. In this way, channel estimation quality at different symbol positions may be comprehensively considered, to determine a symbol position of the symbol carrying the first DCI relative to the symbol carrying the DMRS, thereby improving channel estimation quality of the first DCI.

In a possible design, the second time-frequency resource is a part or all of time-frequency resources on each of M symbols starting from the initial symbol of the first time-frequency resource, where M is an integer greater than or equal to 1.

In this way, if the second time-frequency resource carrying the first DCI is a part or all of time-frequency resources on each of M symbols starting from an initial symbol carrying the first PDSCH, the first DCI is sent earlier in time domain on the first PDSCH, and a transmission delay of the first DCI is small.

In a possible design, the second time-frequency resource is a part or all of time-frequency resources, in the first time-frequency domain resource, on each of M symbols starting from an initial symbol in the N groups of symbols, where M is an integer greater than or equal to 1.

In this way, if the first DCI starts to be sent from the initial symbol in the N groups of symbols carrying the DMRSs, the first DCI can be sent earlier in time domain, and a transmission delay of the first DCI is small. In addition, channel estimation performance of the first DCI can also be improved when channel estimation quality of the DMRS is ensured.

In a possible design, the second time-frequency resource is a part or all of time-frequency resources, in the first time-frequency resource, on each of M symbols starting from an initial symbol after an initial group of symbols in the N groups of symbols, where M is an integer greater than or equal to 1.

In this way, if the first DCI starts to be transmitted after the initial group of symbols carrying the DMRS, rate matching that needs to be performed on the DMRS and the first DCI can be avoided, and a delay of the first DCI, channel estimation performance of the first DCI, and implementation complexity can be considered in a compromise.

In a possible design, when N is greater than or equal to 2, the second time-frequency resource is a part or all of time-frequency resources, in the first time-frequency resource, on M symbols that are closest to a second symbol in time domain, where M is an integer greater than or equal to 1; and the second symbol is a symbol between an initial group of symbols and a first symbol in the N groups of symbols, the first symbol is an initial symbol in a group of symbols in the N groups of symbols other than the initial group of symbols, and the second symbol and the initial group of symbols are not consecutive in time domain.

In this way, when the first DCI is transmitted on the first PDSCH, and a symbol carrying the first DCI is located on a time-frequency resource that is closest to the second symbol in time domain and that is between the initial group of symbols and the first symbol, channel estimation for the first DCI may be obtained through interpolation of channel estimation for DMRSs on two sides of the symbol carrying the first DCI, so that channel estimation performance of the first DCI can be improved.

In a possible design, the first symbol is an initial symbol in a last group of symbols in the N groups of symbols. In this way, channel estimation for the first DCI may be performed by using all DMRSs carried on the first PDSCH, so that channel estimation quality of the first DCI is good.

In a possible design, the first symbol is an earliest symbol in time domain that can meet the following condition: A time-frequency resource that is between the initial group of symbols and the first symbol and that can be used for carrying the first downlink control information is greater than or equal to a time-frequency resource required by the first downlink control information.

In this way, channel estimation for the first DCI may be performed by using channel estimation for a part of DMRSs on the first PDSCH, so that it can be ensured that channel estimation for the first DCI is obtained through interpolation of channel estimation for the DMRS, thereby improving channel estimation quality of the first DCI, and a delay from the first DCI to the second data channel can also be reduced by using only the part of DMRSs on the first PDSCH.

In a possible design, the first symbol is a symbol in the N groups of symbols that is indicated by signaling or specified in a protocol. In this way, a symbol carrying the first DCI is between the initial group of symbols and the first symbol. A network device may determine an encoding manner or a rate matching manner of the first DCI based on the time-frequency resource between the initial group of symbols and the first symbol, thereby ensuring that the first DCI is carried between the initial group of symbols and the first symbol.

In a possible design, when N is 1, the second time-frequency resource is a part or all of time-frequency resources, in the first time-frequency resource, on M symbols that are closest to the N groups of symbols in time domain.

For example, a network device or a terminal device may select a symbol that is closest to the initial group of symbols and that is before the initial group of symbols in time domain, a symbol after the initial group of symbols in time domain, or the like. Considering that when there is only one group of DMRS symbols on the first time-frequency resource carrying the first PDSCH, a shorter distance from the group of DMRS symbols indicates better channel estimation quality, so that good channel estimation quality of the first DCI can be ensured.

In a possible design, the M symbols are: consecutive symbols in time domain or symbols in the consecutive symbols in time domain other than a first-type symbol; and the first-type symbol includes at least one of the following: a symbol on which the indication information is located; a symbol in the N groups of symbols; or a symbol including a rate matching resource.

In this way, if the M symbols carrying the first DCI are the consecutive symbols in time domain, implementation complexity of sending the first DCI by a network device and receiving the first DCI by a terminal device is low. If the M symbols carrying the first DCI do not include the first-type symbol, implementation complexity of sending the first DCI by the network device and receiving the first DCI by the terminal device may also be low.

In a possible design, when a terminal device reports that receiving of the first downlink control information on the N groups of symbols is not supported, the first-type symbol includes the symbol in the N groups of symbols. In other words, whether the first DCI is carried on the N groups of symbols may be determined based on a capability of the terminal device. If the terminal device does not support carrying the first DCI on the N groups of symbols, considering that resources on the N groups of symbols carried on the first PDSCH are irregular, a network device does not send the first DCI on the N groups of symbols, so that implementation complexity of sending the first DCI by the network device and receiving the first DCI by the terminal device can be improved.

In a possible design, when the terminal device reports that receiving of the first downlink control information on a CORESET carrying the indication information is not supported, the first-type symbol includes the symbol on which the indication information is located. To be specific, if the first time-frequency resource carrying the first PDSCH carries the indication information, and a capability of the terminal device does not support carrying the first DCI on the symbol carrying the indication information, a network device does not send the first DCI on the symbol carrying the indication information, so that implementation complexity of sending the first DCI by the network device and receiving the first DCI by the terminal device can be improved.

In a possible design, a minimum time interval between an end symbol of the third time-frequency resource and a start symbol on the second data channel is a first time interval. The first time interval is a minimum time interval between an end symbol of second downlink control information and a start symbol on a data channel scheduled by using the second downlink control information, and the second downlink control information is any piece of downlink control information carried on a physical downlink control channel.

For example, the second downlink control information is second DCI, and the second DCI is any piece of DCI carried on the PDCCH. In other words, the first time interval is a minimum time interval between the end symbol carrying the second DCI and the start symbol on the data channel scheduled by using the second DCI. The data channel scheduled by using the second DCI is, for example, a PDSCH/PUSCH.

If the minimum time interval between the end symbol of the third time-frequency resource carrying the DMRS on the first PDSCH and the start symbol on the second data channel scheduled by using the first DCI is the first time interval, a design of channel estimation performed by using all DMRSs on the first PDSCH may be used, so that channel estimation quality of the first DCI is good. This can also ensure that the terminal device determines, based on the first time interval, whether to send or receive the data channel, thereby improving data transmission efficiency of the terminal device, and power consumption of the terminal device can also be reduced when the terminal device does not send or receive the data channel.

In the first time interval, the terminal device may perform channel estimation, demodulation and decoding of the first DCI, data preparation for the data channel, and the like.

In a possible design, if an end symbol of the second time-frequency resource is after an end symbol in the N groups of symbols, a minimum time interval between the end symbol of the second time-frequency resource and a start symbol on the second data channel is a first time interval. It is assumed that the N groups of symbols are one group of symbols, and end time of the second time-frequency resource occupied by the first DCI is later than end time of the group of symbols. In this case, a minimum time interval between end time of the end symbol of the second time-frequency resource occupied by the first DCI and start time of the start symbol on the second data channel scheduled by using the first DCI is the first time interval. That is, the first time interval is determined based on the end time of the first DCI, to ensure receiving performance of receiving the first DCI by the terminal device.

If the end symbol of the second time-frequency resource is before the end symbol in the N groups of symbols, in the N groups of symbols, a minimum time interval between an end symbol in an earliest symbol group after the end symbol of the second time-frequency resource and the start symbol on the second data channel is the first time interval. In this way, if N is 1, which is equivalent to that an end symbol carrying the first DCI is before one group of symbols, a minimum time interval between an end symbol in the group of symbols and the start symbol on the second data channel is the first time interval. If N is greater than or equal to 2, the first DCI may be carried between the initial group of symbols and an earliest symbol group after the end symbol carrying the first DCI. In this case, a minimum time interval between an end symbol in the earliest symbol group and the start symbol on the second data channel is the first time interval. Channel estimation for the PDCCH carrying the first DCI may be obtained through interpolation, and channel estimation quality obtained in this way is good.

If the end symbol of the second time-frequency resource is a symbol in the N groups of symbols, in the N groups of symbols, a minimum time interval between the start symbol on the second data channel and an end symbol in a symbol group that is in the N groups of symbols and that overlaps the end symbol of the second time-frequency resource is the first time interval. It is assumed that N is 3, and the end symbol of the second time-frequency resource carrying the first DCI is in a 2^{nd} group of symbols. In this case, a minimum time interval between the end symbol in the 2^{nd} group of symbols and the start symbol on the second data channel is the first time interval.

In a possible design, when N is greater than or equal to 2, a minimum time interval between an end symbol of the second time-frequency resource and a start symbol on the second data channel is a first time interval plus preset duration. In this way, when the DMRS and the first DCI are carried on the first PDSCH, a minimum time interval between an end symbol carrying the first DCI and the start symbol on the second data channel is the existing first time interval plus the preset duration, so that the terminal device can complete channel estimation, demodulation and decoding of the first DCI, and preparation for the data channel in the minimum time interval.

In a possible design, demodulation reference signals on the first downlink data channel that are carried on all symbol groups in the N groups of symbols are used for estimating a channel of all symbols of the second time-frequency resource. In this way, when the first DCI is carried between the initial group of symbols and a last group of symbols, and channel estimation for the first DCI is performed by using the DMRSs carried on all the symbol groups, channel estimation for the first DCI can be obtained through interpolation of channel estimation for the DMRSs, so that channel estimation performance of the first DCI can be improved.

In a possible design, when N is greater than or equal to 2, in the N groups of symbols, demodulation reference signals on the first downlink data channel that are carried on the earliest symbol group after the end symbol of the second time-frequency resource and carried on all symbol groups before the earliest symbol group are used for estimating a channel of all symbols of the second time-frequency resource.

With reference to the foregoing design, if N is greater than or equal to 2, a symbol carrying the first DCI may be between the initial group of symbols and a last group of symbols. If channel estimation for the first DCI is performed by using DMRSs that are carried on an earliest symbol group after an end symbol carrying the first DCI and carried on all symbol groups before the earliest symbol group, channel estimation for the first DCI may be obtained through DMRS interpolation. In addition, if N is greater than or equal to 3, and the first DCI is carried before a specific group of symbols between the earliest symbol group and the last group of symbols, channel estimation for the first DCI may alternatively be performed by using a part of DMRSs, thereby reducing a transmission delay from the first DCI to the channel scheduled by using the first DCI.

Alternatively, in the N groups of symbols, demodulation reference signals on the first downlink data channel that are carried on a symbol group to which the end symbol of the second time-frequency resource belongs and carried on all symbol groups before the symbol group to which the end symbol of the second time-frequency resource belongs are used for estimating the channel of all the symbols of the second time-frequency resource. In other words, if N is greater than or equal to 2, and the end symbol of the second time-frequency resource carrying the first DCI is in a specific group of symbols carrying a DMRS, the DMRS carried on the DMRS symbol group to which the end symbol of the second time-frequency resource belongs may be used for estimating a channel of all symbols carrying the first DCI. With reference to the foregoing design, when the end symbol carrying the first DCI is in a middle group of symbols, channel estimation for the first DCI may be performed by using a part of DMRSs. This ensures that channel estimation for the first DCI is obtained through DMRS interpolation, and a transmission delay from the first DCI to the channel scheduled by using the first DCI can also be reduced.

In a possible design, in the N groups of symbols, demodulation reference signals on the first downlink data channel that are carried on all symbol groups preceding an end moment of the end symbol of the second time-frequency resource are used for estimating a channel of all symbols of the second time-frequency resource.

For example, when N is 1, in the first time-frequency resource carrying the first PDSCH, the second time-frequency resource carrying the first DCI may be after one symbol group carrying a DMRS, and the DMRS carried on the symbol group is used for estimating a channel of all symbols carrying the first DCI. Alternatively, when N is greater than or equal to 2, in the first time-frequency resource carrying the first PDSCH, the second time-frequency resource carrying the first DCI may be between two symbol groups, and DMRSs that are carried on all symbol groups preceding an end moment of the second time-frequency resource are used for estimating a channel of all symbols carrying the first DCI, so that the channel of the first DCI can be obtained through DMRS interpolation, thereby improving channel estimation quality of the first DCI.

According to a third aspect, a communication apparatus is provided, and includes a receiving unit configured to receive indication information, where the indication information indicates a first time-frequency resource used for carrying a first downlink data channel, the first time-frequency resource includes a third time-frequency resource, and the third time-frequency resource is used for carrying a demodulation reference signal on the first downlink data channel. The receiving unit is further configured to receive first downlink control information on a second time-frequency resource, where the second time-frequency resource is a part of resources in the first time-frequency resource, and the first downlink control information indicates a time-frequency resource used for carrying a second data channel; and the second time-frequency resource is determined based on an initial symbol of the first time-frequency resource, or the second time-frequency resource is determined based on the third time-frequency resource.

According to a fourth aspect, a communication apparatus is provided, and includes a sending unit configured to send indication information, where the indication information indicates a first time-frequency resource used for carrying a first downlink data channel, the first time-frequency resource includes a third time-frequency resource, and the third time-frequency resource is used for carrying a demodulation reference signal on the first downlink data channel. The sending unit is further configured to send first downlink control information on a second time-frequency resource, where the second time-frequency resource is a part of resources in the first time-frequency resource, and the first downlink control information indicates a time-frequency resource used for carrying a second data channel; and the second time-frequency resource is determined based on an initial symbol of the first time-frequency resource, or the second time-frequency resource is determined based on the third time-frequency resource.

For beneficial effects of the third aspect and the fourth aspect, refer to the descriptions of the first aspect.

According to a fifth aspect, a communication system is provided. The communication system may include the network device and at least one terminal device in any one of the foregoing aspects and the possible implementations.

According to a sixth aspect, an embodiment of this application provides a computer-readable storage medium. The computer-readable storage medium stores computer instructions. When the computer instructions are run on a communication apparatus, the communication apparatus is caused to perform the control information transmission method in any one of the foregoing aspects and the possible implementations.

According to a seventh aspect, an embodiment of this application provides a computer program product. When computer program instructions are run on a communication apparatus, the communication apparatus is caused to perform the control information transmission method in any one of the foregoing aspects and the possible implementations.

### BRIEF DESCRIPTION OF DRAWINGS

FIG. 1 is a diagram of an architecture of a communication system according to an embodiment of this application;
FIG. 2 is a diagram of a PDSCH mapping type A and a PDSCH mapping type B according to an embodiment of this application;
FIG. 3 is a diagram of channel estimation quality sorting of symbols at pos 0, pos 1, pos 2, and pos 3 in a scenario of a DMRS in a single-symbol mode according to an embodiment of this application;
FIG. 4 is a diagram of scheduling a PDSCH through a PDCCH according to an embodiment of this application;
FIG. 5 is a diagram of time between an end of a last symbol on a PDCCH for scheduling a PUSCH and a start moment of a 1^{st} uplink symbol on the corresponding PUSCH according to an embodiment of this application;
FIG. 6 is a schematic flowchart of a control information transmission method according to an embodiment of this application;
FIG. 7 is a diagram of a second time-frequency resource in a first time-frequency resource carrying a first PDSCH according to an embodiment of this application;
FIG. 8 is a diagram of a second time-frequency resource in a first time-frequency resource carrying a first PDSCH according to an embodiment of this application;
FIG. 9 is a diagram of a minimum time interval between first DCI and a PUSCH when a first PDSCH carries a DMRS and the first DCI according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

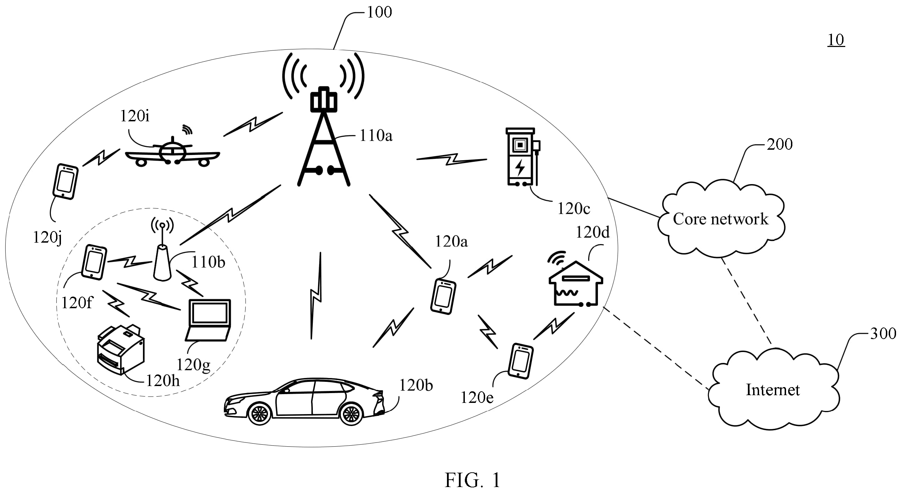

FIG. 1 is a diagram of an architecture of a communication system 10 to which an embodiment of this application is applied. As shown in FIG. 1, the communication system includes a radio access network (radio access network, RAN) 100. The RAN 100 includes at least one RAN node (for example, 110a and 110b in FIG. 1, which are collectively referred to as 110), and may further include at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. Mutual connections between terminals and between RAN nodes may be implemented in a wired or wireless manner. The communication system 10 may further include a core network 200. The RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The communication system 10 may further include an internet 300.

The RAN 100 may be an evolved universal terrestrial radio access (evolved universal terrestrial radio access, E-UTRA) system, a new radio (new radio, NR) system, or a future radio access system defined in the 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN entity, or an access node, is configured to help a terminal access a communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation base station in a 6th generation (6th generation, 6G) mobile communication system, or a base station in a future mobile communication system. The RAN node may be a macro base station (for example, 110a in FIG. 1), a micro base station or an indoor base station (for example, 110b in FIG. 1), or a relay node or a donor node.

In another application scenario, a plurality of RAN nodes may cooperate to help a terminal implement radio access, and different RAN nodes separately implement a part of functions of a base station. For example, the RAN node may be a central unit (central unit, CU), a distributed unit (distributed unit, DU), or a radio unit (radio unit, RU). The CU herein completes functions of a radio resource control protocol layer and a packet data convergence protocol (packet data convergence protocol, PDCP) layer of the base station, and may further complete functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further divided into two types of RAN nodes of a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. A specific technology and a specific device form that are used by the RAN node are not limited in embodiments of this application. For ease of description, the following is described by using an example in which the base station is used as a RAN node.

The terminal is a device having a wireless transceiver function, and may send a signal to a base station or receive a signal from the base station. The terminal may also be referred to as a terminal device, a user equipment (user equipment, UE), a mobile station, a mobile terminal, or the like. The terminal may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for a base station 110a, 120i is a terminal. In other words, communication between 110a and 120i is performed based on a radio air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses. 110a and 110b each in FIG. 1 may be referred to as a communication apparatus having a function of the base station, and 120a to 120j each in FIG. 1 may be referred to as a communication apparatus having a function of the terminal.

Communication between the base station and the terminal, between base stations, or between terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may also be performed by a module (for example, a chip) in the base station, or may be performed by a control subsystem including the function of the base station. Herein, the control subsystem including the function of the base station may be a control center in the foregoing application scenarios, such as a smart grid, industrial control, smart transportation, and a smart city. A function of the terminal may also be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell establishing the wireless connection to the terminal is referred to as a serving cell of the terminal. When communicating with the serving cell, the terminal is also subject to interference of a signal from a neighboring cell.

In embodiments of this application, a time domain symbol may be an orthogonal frequency division multiplexing (orthogonal frequency division multiplexing, OFDM) symbol or a discrete Fourier transform-spread-OFDM (discrete Fourier transform-spread-OFDM, DFT-s-OFDM) symbol. Unless otherwise specified, all symbols in embodiments of this application are time domain symbols.

It may be understood that in embodiments of this application, a PDSCH, a PDCCH, and a PUSCH are only used as examples of a downlink data channel, a downlink control channel, and an uplink data channel. In different systems and different scenarios, a data channel and a control channel may have different names. This is not limited in embodiments of this application.

For ease of understanding, a part of concepts related to embodiments of this application is described for reference by using the following examples.

### 1. Subcarrier spacing (subcarrier spacing, SCS)

In NR, a plurality of SCSs are defined. An SCS corresponding to an SCS sequence number is kHz. For example, SCSs whose sequence numbers are 0 to 4 respectively correspond to 15 kHz, 30 kHz, 60 kHz, 120 kHz, and 240 kHz. In NR, one resource block (resource block, RB) is defined as 12 consecutive subcarriers in frequency domain.

### 2. Carrier and cell

The carrier is a radio signal that is transmitted by a radio frequency device of a base station or a terminal and that has a specific frequency, bandwidth, and standard, that is, an electromagnetic wave, which is a medium for carrying information in wireless mobile communication. A carrier used by the base station for sending is referred to as a downlink carrier, and a carrier used by the terminal for sending is referred to as an uplink carrier.

The cell is described from a perspective of resource management or mobility management by a higher layer (for example, a protocol layer above a physical layer, like a radio resource control layer or a medium access control layer). Coverage of each network device may be divided into one or more cells.

In a current NR standard, one downlink carrier may be configured for one cell. Optionally, one uplink carrier or two uplink carriers may be further configured for one cell. For a terminal device, a cell that provides services for the terminal device may be referred to as a serving cell. The cell in this application may be a serving cell.

### 3. Carrier aggregation and cross-carrier scheduling

To implement high-speed transmission, there is a carrier aggregation (carrier aggregation, CA) mechanism in NR. A terminal that supports CA may simultaneously perform data transmission on a plurality of carriers, to improve a data transmission rate.

Each carrier in CA is also referred to as a member carrier or a component carrier (component carrier, CC).

A cell in which a PDCCH corresponding to a data channel can be sent is referred to as a scheduling cell (scheduling cell), which is also referred to as a main scheduling cell; and a cell in which data channel transmission is performed is referred to as a scheduled cell (scheduled cell). A UE receives the PDCCH in the main scheduling cell, and sends or receives data in the scheduled cell based on control information carried on the PDCCH.

A control channel is carried on a downlink carrier of a cell, to perform uplink and downlink data channel scheduling of the cell. The cell is a self-scheduling (self-scheduling) cell. The cell is both a scheduling cell and a scheduled cell.

In a plurality of cells of CA, a control channel is carried on a downlink carrier of a cell, and uplink and downlink data channel scheduling of another cell may be performed. Herein, a cell in which the control channel is carried is referred to as a scheduling cell, and a cell in which uplink and downlink data channels are carried is referred to as a scheduled cell. This scheduling form is referred to as cross-carrier scheduling (cross-carrier scheduling, CCS). One main scheduling cell may correspond to a plurality of scheduled cells, to be specific, a control channel may be sent in the main scheduling cell, to perform data scheduling of the plurality of scheduled cells.

### 4. PDCCH

One PDCCH candidate (candidate) in NR may include L={1, 2, 4, 8, 16} control channel elements (control channel elements, CCEs). Herein, L is referred to as an aggregation level (aggregation level, AL) of the PDCCH candidate. One CCE includes six resource element groups (resource element groups, REGs), and each REG corresponds to one RB on one OFDM symbol.

A PDCCH of one UE may be sent or not be sent on one PDCCH candidate. The UE may monitor a PDCCH candidate to determine whether there is a PDCCH to be sent to the UE.

A search space (search space) whose aggregation level AL is L is defined as a set including several PDCCH candidates whose sizes are L CCEs. A search space set (search space set) is a set of search spaces including different ALs. Sometimes, the search space is a general concept, and may be used for representing a search space, a search space set, a plurality of search space sets, or a type of search space set.

One search space set is associated with one control resource set (control resource set, CORESET). The CORESET is a concept introduced in NR. One CORESET is defined in one cell, and includes a group of consecutive or non-consecutive RBs in frequency domain and one/two/three consecutive OFDM symbols in time domain.

### 5. DCI

### (1) Introduction to basic concepts of DCI

In NR, the DCI is carried on a PDCCH. For example, DCI on a PDCCH for scheduling a PDSCH may include indication information of a scheduled cell and two resource indication fields for the PDSCH: frequency domain resource configuration (frequency domain resource assignment) and time domain resource configuration (time domain resource assignment), among other control information. DCI on a PDCCH for scheduling a PUSCH may include indication information of a scheduled cell, two resource indication fields for the PUSCH: frequency domain resource configuration and time domain resource configuration, and the like.

### (2) DCI size

The DCI size (size) may be interpreted in two ways: one is a quantity of bits of payload (payload) in DCI, and the other is a sum of the quantity of bits of the payload and a quantity of bits of cyclic redundancy check (cyclic redundancy check, CRC). If padding (padding) is performed on information bits in the DCI, the quantity of bits of the payload (payload) is a sum of a quantity of information bits and a quantity of padded information bits. If padding is not performed on the information bits in the DCI, the quantity of bits of the payload (payload) is the quantity of information bits. In NR systems, for example, a bit (bit) width of the CRC is 24.

### (3) Two-stage DCI

The two-stage DCI includes first-stage DCI and second-stage DCI. Two pieces of DCI are for sending different downlink scheduling information, to jointly complete PDSCH/PUSCH scheduling or another function. Typically, a quantity of information bits in the first-stage DCI is fixed, and a quantity of information bits in the second-stage DCI is variable. The two-stage DCI can save control channel resources, reduce PDCCH monitoring complexity for a UE, and the like.

Currently, using the two-stage DCI in a DCI format for multi-cell scheduling is under discussion. The DCI format for multi-cell scheduling is described below.

### 6. DCI format for multi-cell scheduling

### (1) Scheduled cell set

The current standard discussions are considering two new DCI formats that can schedule data transmissions on two two or more cells simultaneously, which are referred to as multi-cell scheduling DCI formats. An example of the two DCI formats is shown in Table 1.

**Table 1**

| DCI format (format) | Use |
|---|---|
| DCI format 0_3 | Scheduling PUSCHs on uplink carriers of one or more cells |
| DCI format 1_3 | Scheduling PDSCHs on downlink carriers of one or more cells |

One or more scheduled cell sets may be configured for one UE, and for cells in each scheduled cell set, multi-cell scheduling may be performed by using the DCI format 0_3/1_3 shown in Table 1.

For example, two scheduled cell sets are configured for one UE. A 1^{st} scheduled cell set includes a cell 0, a cell 1, a cell 2, and a cell 3, and a 2^{nd} scheduled cell set includes a cell 4, a cell 5, and a cell 6. The DCI format 0_3 may be for simultaneously scheduling one or more of the cell 0, the cell 1, the cell 2, and the cell 3. The DCI format 1_3 may be for simultaneously scheduling one or more of the cell 4, the cell 5, and the cell 6.

A piece of DCI whose DCI format is the DCI format for multi-cell scheduling may be for scheduling data transmission of a plurality of cells, but not all pieces of DCI whose DCI formats are the DCI format for multi-cell scheduling are for simultaneously scheduling data transmission of a plurality of cells. An indication field exists in the DCI format for multi-cell scheduling, and indicates one or more scheduled cells currently scheduled by using the DCI, and the one or more scheduled cells are all cells in a scheduled cell set that corresponds to the DCI format for multi-cell scheduling.

Because multi-cell scheduling is to schedule a plurality of carriers of a plurality of cells, the DCI format for multi-cell scheduling sometimes is also referred to as a DCI format for multicarrier scheduling.

### 7. DMRS sending on a PDSCH

### (1) PDSCH mapping type (mapping type)

In NR, there are two PDSCH mapping types: a mapping type A and a mapping type B. PDSCHs of the two types have different start symbols S (where a sequence number of a 1^{st} symbol in a slot is denoted as 0, and so on) and different quantities L of consecutive symbols (counting from the symbol S), and also have different DMRS positions. The following table shows a difference in S and a difference in L between the two mapping types. It can be learned from Table 2 that, in a case of a normal cyclic prefix (normal cyclic prefix, NCP) (where a case of an extended cyclic prefix (extended cyclic prefix, ECP) is similar):

Start symbols occupied by the PDSCH of the mapping type A may be first four symbols {0, 1, 2, 3}, and start symbols occupied by the PDSCH of the mapping type B may be first 13 symbols {0, ..., 12}. A quantity of consecutive symbols occupied by the PDSCH of the mapping type A may be {3, ..., 14}, and a quantity of consecutive symbols occupied by the PDSCH of the mapping type B may be {2, 4, 7}.

**Table 2**

| PDSCH mapping type | Normal cyclic prefix | | | Extended cyclic prefix | | |
|---|---|---|---|---|---|---|
| | *S* | *L* | *S+L* | *S* | *L* | *S+L* |
| Type A | {0, 1, 2, 3} (Note 1) | {3, ..., 14} | {3, ..., 14} | {0, 1, 2, 3} (Note 1) | {3, ..., 12} | {3, ..., 12} |
| Type B | {0, ..., 12} | {2, 4, 7} | {2, ..., 14} | {0, ..., 10} | {2, 4, 6} | {2, ..., 12} |
| Note 1: S=3 is applicable only if dmrs-TypeA-Position=3 | | | | | | |

dmrs-TypeA-Position in Table 2 is a higher-layer parameter, and may be configured as {pos 0, pos 1, pos 3}. If the configuration is not provided, the parameter is considered as pos 2 by default. pos indicates a quantity of symbol groups. The following describes the symbol group. pos 0 indicates that a PDSCH carries one group of DMRS symbols, pos 1 indicates that the PDSCH carries two groups of DMRS symbols, pos 2 indicates that the PDSCH carries three groups of DMRS symbols, and pos 3 indicates that the PDSCH carries four groups of DMRS symbols.

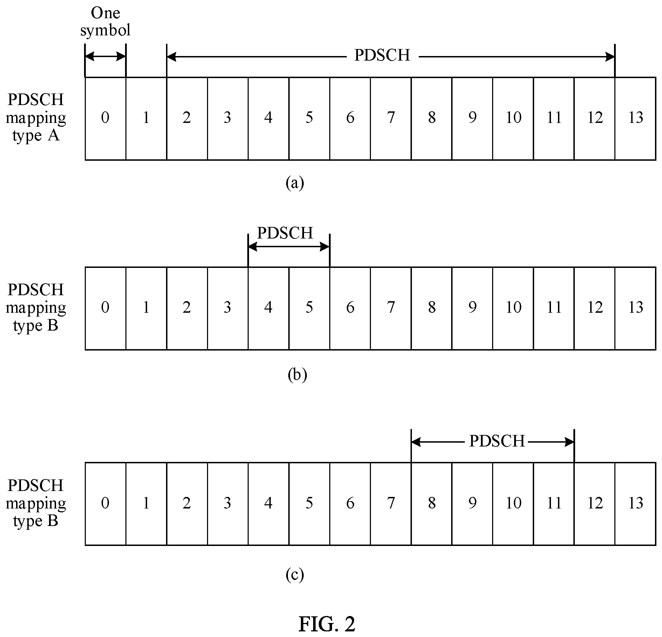

(a) in FIG. 2 shows an example of the PDSCH mapping type A. The start symbol S of the PDSCH is 2, and the quantity L of consecutive symbols is 11 (a symbol 2 to a symbol 12). (b) in FIG. 2 shows an example of the PDSCH mapping type B. The start symbol S of the PDSCH is 4, and the quantity L of consecutive symbols is 2 (a symbol 4 and a symbol 5). (c) in FIG. 2 shows an example of the PDSCH mapping type B. The start symbol S of the PDSCH is 8, and the quantity L of consecutive symbols is 4 (a symbol 8 to a symbol 11).

### (2) DMRS sending on a PDSCH

First, descriptions in a protocol are clarified as follows: In the protocol, sequence numbers of symbols start from 0. However, for the symbols, counting starts from a 1^{st} symbol. In other words, a symbol numbered 0 is a 1^{st} symbol, a symbol numbered 1 is a 2^{nd} symbol, and so on.

For a DMRS carried on the PDSCH, there is a single-symbol mode and a double-symbol mode. In the single-symbol mode, the DMRS may be sent on one or more symbols, and the symbols for sending the DMRS are not consecutive. In the double-symbol mode, DMRSs may be sent on one or more groups of symbols, each group of DMRSs is transmitted on two consecutive OFDM symbols, and the groups are not consecutive.

The DMRS is placed on a symbol of *l* = *l̅* + *l'*.

In the single-symbol mode, *l̅* is one or more non-consecutive symbols, and *l'* is 0.

In the double-symbol mode, *l̅* is one or more non-consecutive symbols, that is, a 1^{st} symbol in each group of DMRS symbols. *l'* may be 0 or 1, and corresponds to two consecutive symbols in the double-symbol mode.

A reference point of *l* and a position *l*₀ of a 1^{st} DMRS symbol depend on the mapping type.

For the mapping type A, *l* is defined based on a start symbol in a slot. If the higher-layer parameter dmrs-TypeA-Position is 'pos 3', the start symbol *l*₀=3; otherwise, *l*₀=2. That is, dmrs-AdditionalPosition mentioned above is a higher-layer parameter. If the configuration is not provided, the parameter is considered as pos 2 by default.

For the mapping type B, *l* is defined based on a start symbol of a scheduled PDSCH resource, and the start symbol *l*₀=0.

A position of the DMRS symbol is determined by *l̅* and *l_{d}*. Herein, there are two cases for *l_{d}*.

For the mapping type A, *l_{d}* is a time domain interval between a 1^{st} OFDM symbol in a slot and a last symbol of the scheduled PDSCH resource. For the mapping type B, *l_{d}* is a time domain interval between OFDM symbols of the resource for scheduling the PDSCH.

The following Table 3 and Table 4 respectively show PDSCH DMRS positions for a single-symbol DMRS and a double-symbol DMRS.

For the mapping type A, in a case of the single-symbol DMRS, *l*₁ in Table 3 may be 11 or 12. In addition, for the PDSCH mapping type B, the DMRS position may move backward due to impact of some rate matching resources.

**Table 3 PDSCH DMRS positions l̅ for the single-symbol DMRS**

| *l_{d}* in symbols | DMRS positions *l̅* | | | | | | | |
|---|---|---|---|---|---|---|---|---|
| | PDSCH mapping type A | | | | PDSCH mapping type B | | | |
| | pos 0 | pos 1 | pos 2 | pos 3 | pos 0 | pos 1 | pos 2 | pos 3 |
| 2 | - | - | - | - | *l*₀ | *l*₀ | *l*₀ | *l*₀ |
| 3 | *l*₀ | *l*₀ | *l*₀ | *l*₀ | *l*₀ | *l*₀ | *l*₀ | *l*₀ |
| 4 | *l*₀ | *l*₀ | *l*₀ | *l*₀ | *l*₀ | *l*₀ | *l*₀ | *l*₀ |
| 5 | *l*₀ | *l*₀ | *l*₀ | *l*₀ | *l*₀ | *l*₀, 4 | *l*₀, 4 | *l*₀, 4 |
| 6 | *l*₀ | *l*₀ | *l*₀ | *l*₀ | *l*₀ | *l*₀, 4 | *l*₀, 4 | *l*₀, 4 |
| 7 | *l*₀ | *l*₀ | *l*₀ | *l*₀ | *l*₀ | *l*₀, 4 | *l*₀, 4 | *l*₀, 4 |
| 8 | *l*₀ | *l*₀, 7 | *l*₀, 7 | *l*₀, 7 | *l*₀ | *l*₀, 6 | *l*₀, 3, 6 | *l*₀, 3, 6 |
| 9 | *l*₀ | *l₀*, 7 | *l*₀, 7 | *l₀*, 7 | *l*₀ | *l*₀, 7 | *l*₀, 4, 7 | *l*₀, 4, 7 |
| 10 | *l*₀ | l₀, 9 | *l*₀, 6, 9 | *l*₀, 6, 9 | *l*₀ | *l₀*, 7 | *l*₀, 4, 7 | *l*₀, 4, 7 |
| 11 | *l*₀ | l₀, 9 | *l*₀, 6, 9 | *l*₀, 6, 9 | *l*₀ | *l*₀, 8 | *l*₀, 4, 8 | *l*₀, 3, 6, 9 |
| 12 | *l*₀ | *l*₀, 9 | *l*₀, 6, 9 | *l*₀, 5, 8, 11 | *l*₀ | l₀, 9 | *l*₀, 5, 9 | *l*₀, 3, 6, 9 |
| 13 | *l*₀ | *l*₀, *l*₁ | *l*₀, 7, 11 | *l*₀, 5, 8, 11 | *l*₀ | *l*₀, 9 | *l*₀, 5, 9 | *l*₀, 3, 6, 9 |
| 14 | *l*₀ | *l*₀, *l*₁ | *l*₀, 7, 11 | *l*₀, 5, 8, 11 | - | - | - | - |

**Table 4 PDSCH DMRS positions l̅ for the double-symbol DMRS**

| *l_{d}* in symbols | DMRS positions *l̅* | | | | | |
|---|---|---|---|---|---|---|
| | PDSCH mapping type A | | | PDSCH mapping type B | | |
| | pos 0 | pos 1 | pos 2 | pos 0 | pos 1 | pos 2 |
| <4 | - | - | - | - | - | |
| 4 | *l*₀ | *l*₀ | | - | - | |
| 5 | *l*₀ | *l*₀ | | *l*₀ | *l*₀ | |
| 6 | *l*₀ | *l*₀ | | *l*₀ | *l*₀ | |
| 7 | *l*₀ | *l*₀ | | *l*₀ | *l*₀ | |
| 8 | *l*₀ | *l*₀ | | *l*₀ | *l*₀, 5 | |
| 9 | *l*₀ | *l*₀ | | *l*₀ | *l*₀, 5 | |
| 10 | *l*₀ | *l*₀, 8 | | *l*₀ | *l*₀, 7 | |
| 11 | *l*₀ | *l*₀, 8 | | *l*₀ | *l*₀, 7 | |
| 12 | *l*₀ | *l*₀, 8 | | *l*₀ | *l*₀, 8 | |
| 13 | *l*₀ | *l*₀, 10 | | *l*₀ | *l*₀, 8 | |
| 14 | *l*₀ | *l*₀, 10 | | - | - | |

### 8. PDSCH channel estimation quality

Because a DMRS on a PDSCH is placed on only a part of symbols on the PDSCH, channel estimation quality of different symbols on the PDSCH is different.

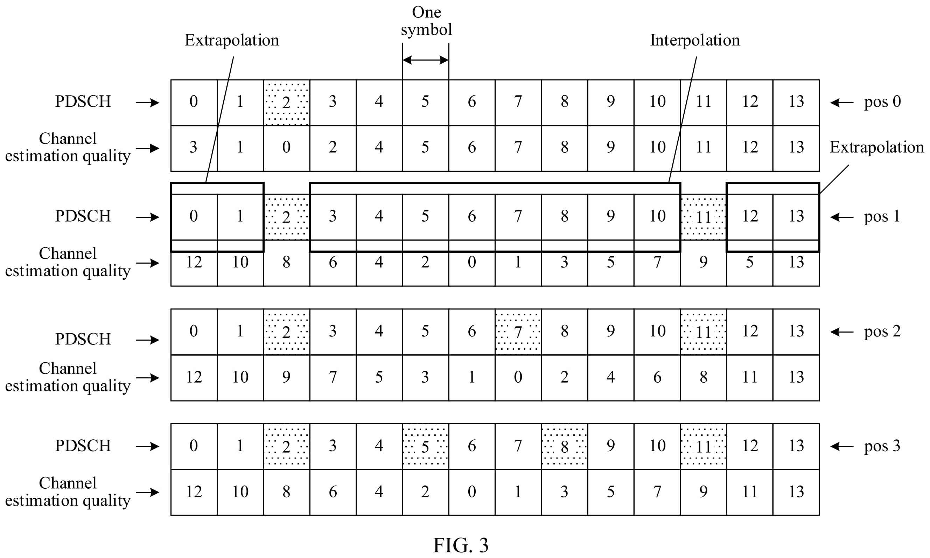

FIG. 3 shows, in a scenario of a PDSCH mapping type A and a DMRS in a single-symbol mode, when dmrs-AdditionalPosition is separately pos 0, pos 1, pos 2, and pos 3, channel estimation quality sorting of symbols on a PDSCH whose symbol length is 14. Numbers corresponding to channel estimation quality of the symbols increase, which corresponds to degradation of channel estimation quality of the current symbols.

For example, in a scenario of pos 0, the DMRS carried on the PDSCH occupies only one symbol 2; in a scenario of pos 1, the DMRS carried on the PDSCH occupies two symbols: a symbol 2 and a symbol 11; in a scenario of pos 2, the DMRS carried on the PDSCH occupies threee symbols: a symbol 2, a symbol 7, and a symbol 11; and in a scenario of pos 3, the DMRS carried on the PDSCH occupies four symbols: a symbol 2, a symbol 5, a symbol 8, and a symbol 11.

Channel estimation quality of the symbols has the following two rules: Channel estimation performance between DMRS symbols obtained through DMRS interpolation is good; and when the DMRS exists on only one side, channel estimation performance obtained through DMRS extrapolation is lower than channel estimation performance obtained through interpolation.

Interpolation means that a PDSCH symbol is located between two DMRS symbols, and after channel estimation for the symbols on which two DMRSs are located may be performed by using the DMRSs on the two DMRS symbols, channel estimation for the PDSCH symbol may be obtained through interpolation of channel estimation for the symbols on which the two DMRSs are located. For example, for dmrs-AdditionalPosition=pos 1, symbol channel estimation separately corresponding to a PDSCH symbol 3 to a PDSCH symbol 10 may be obtained through interpolation of channel estimation for a DMRS symbol 2 and a DMRS symbol 11. Extrapolation means that a DMRS symbol exists on only one side of a PDSCH symbol, interpolation for channel estimation cannot be performed, and only extrapolation for channel estimation can be performed. For example, dmrs-AdditionalPosition=pos 1 is used as an example. Channel estimation for a PDSCH symbol 0 and a PDSCH symbol 1 and channel estimation for a PDSCH symbol 12 and a PDSCH symbol 13 may be obtained through extrapolation of channel estimation for the DMRS symbol 2 and the DMRS symbol 11.

### 9. Processing time from DCI to a data channel

### (1) Processing time from DCI to a PDSCH

When the DCI is carried on a PDCCH for sending, the PDCCH carrying the DCI is sent on a carrier whose subcarrier spacing is *µ_{PDCCH}*, a PDSCH scheduled by using the DCI is sent on another carrier whose subcarrier spacing is *µ_{PDSCH}*, and *µ_{PDCCH}* is not equal to *µ_{PDSCH}*, a unit slot length *µ_{PDCCH}* of the PDCCH is different from a unit slot length *µ_{PDSCH}* of the PDSCH.

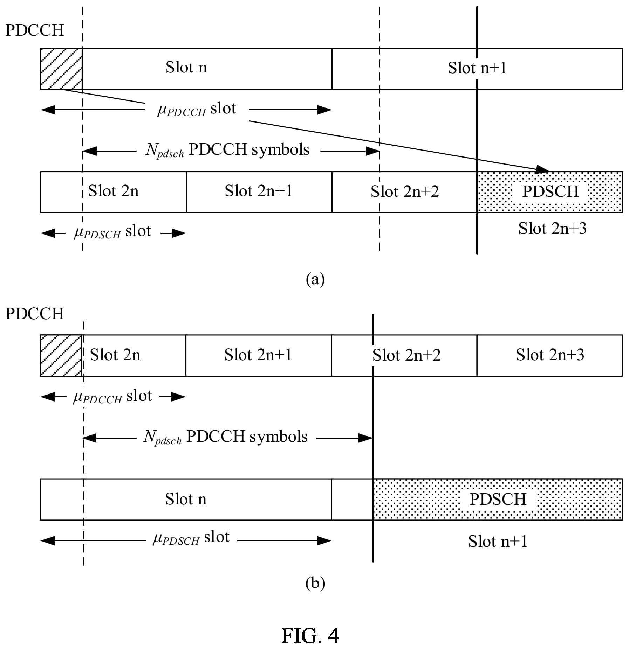

When *µ_{PDCCH}<µ_{PDCCH}*, a start symbol on the PDSCH is not earlier than an initial symbol in an initial PDSCH slot after *N_{pdsch}* PDCCH symbols after an end moment of the PDCCH. (a) in FIG. 4 is a diagram of scheduling the PDSCH through the PDCCH when *µ_{PDCCH}<µ_{PDSCH}*. When the PDCCH is sent on the carrier whose subcarrier spacing is *µ_{PDCCH}*, the end moment of the PDCCH is in a slot n. When the PDSCH is scheduled, by using the DCI carried on the PDCCH, on the carrier whose subcarrier spacing is *µ_{PDSCH}*, a start moment of the PDSCH is later than an initial PDSCH slot 2n+2 after the *N_{pdsch}* PDCCH symbols after the end moment of the PDCCH. For example, the start moment of the PDSCH is in a slot 2n+3.

When *µ_{PDCCH}>µ_{PDCCH}*, a time interval between an end symbol on the PDCCH and a start symbol on the PDSCH is not less than the *N_{pdsch}* PDCCH symbols. (b) in FIG. 4 is a diagram of scheduling the PDSCH through the PDCCH when *µ_{PDCCH}>µ_{PDSCH}*. When the PDCCH is sent on the carrier whose subcarrier spacing is *µ_{PDCCH}*, the end moment of the PDCCH is in a slot 2n. When the PDSCH is scheduled, by using the DCI carried on the PDCCH, on the carrier whose subcarrier spacing is *µ_{PDSCH}*, a start moment of the PDSCH is later than the *N_{pdsch}* PDCCH symbols after an end moment of the PDCCH. For example, the start moment of the PDSCH is in a slot n+1.

A value of *N_{pdsch}* varies with the subcarrier spacing *µ_{PDCCH}* of the PDCCH. For the value, refer to Table 5.

**Table 5**

| *µ_{PDCCH}* | *N_{pdsch}* [symbol] |
|---|---|
| 0 | 4 |
| 1 | 5 |
| 2 | 10 |
| 3 | 14 |
| 5 | 56 |
| 6 | 112 |

### 10. Processing time from DCI to a PUSCH

In NR, two user capabilities (a UE processing capability 1 and a UE processing capability 2) are defined for processing time of the PUSCH (that is, time required from receiving, by a UE, the DCI for scheduling the PUSCH to preparing, by the UE, to transmit the PUSCH).

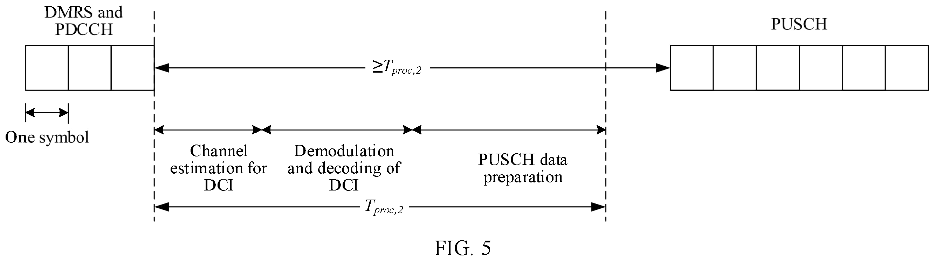

FIG. 5 is a diagram of time between an end of a last symbol on a PDCCH for scheduling a PUSCH and a start moment of a 1^{st} uplink symbol (including a DMRS) on the corresponding PUSCH. The time between the end of the last symbol on the PDCCH for scheduling the PUSCH and the start moment of the 1^{st} uplink symbol (including the DMRS) on the corresponding PUSCH is not less than *T*_{*proc*,2} = max((*N*₂ + *d*_{2,1})(2048 +144) · *κ*2*^{-µ}* ·*T_{c}*,*d*_{2,2}). In other words, during a design, a terminal device needs to be able to complete PDCCH receiving and information parsing and generate a corresponding PUSCH (including performing channel estimation for DCI, demodulation and decoding of the DCI, and data preparation for the PUSCH) in *T_{proc,2}*, so that a strictest scheduling requirement can be met.
(1) *N₂* is determined by the UE based on *µ* and a processing capability of the UE, or based on the UE processing capability 1 shown in Table 6 and the UE processing capability 2 shown in Table 7. Herein, *µ* corresponds to a *µ* value for generating large *T_{proc,2}* in sequence numbers of a downlink subcarrier spacing and an uplink subcarrier spacing (*µ*_{DL}, *µ*_{UL}).
*(2) κ = Tₛ* /*T_{c}* = 64. In an NR system, *T_{c}* is a time unit, and *T_{c}* = 1/(Δ*f*ₘₐₓ · *N_{f}*), where Δ*f*ₘₐₓ = 480 · 10³ Hz and *N*_{f} = 4096. *κ* indicates a ratio of *Tₛ* to *T_{c}*, and is a fixed value *κ* = *Tₛ*/*T_{c}* = 64. *Tₛ* = 1/(Δ*f*_{ref} · *N*_{f,ref}), Δ*f*_{ref} = 15 · 10³ Hz and *N*_{f,ref} = 2048.
(3) If a 1^{st} symbol on the PUSCH includes only the DMRS, *d_{2, 1}*=0; otherwise, *d*_{*2*, *1*}=1.
(4) (*N*₂ +*d*_{2,1})(2048 + 144)·*κ*2*^{-µ}* ·*T_{c}* corresponds to PDCCH parsing time and PUSCH preparation time when bandwidth part (bandwidth part, BWP) switching is not considered.
(5) If DCI scheduling triggers BWP switching, *d_{2,2}* is equal to BWP switching time; otherwise, *d_{2,2}*=0.

**Table 6 PUSCH preparation time based on the UE processing capability 1**

| *µ* | PUSCH preparation time *N₂* (symbol) |
|---|---|
| 0 | 10 |
| 1 | 12 |
| 2 | 23 |
| 3 | 36 |

**Table 7 PUSCH preparation time based on the UE processing capability 2**

| *µ* | PUSCH preparation time *N₂* (symbol) |
|---|---|
| 0 | 5 |
| 1 | 5.5 |
| 2 | 11 for frequency range 1 (in the frequency range 1) |

It can be learned from the foregoing descriptions that currently, the DCI may be carried on the PDCCH. However, for a terminal device, the terminal device needs to perform blind detection on a large quantity of PDCCH candidates, causing high power consumption. In addition, if a plurality of terminal devices are scheduled to transmit data on the PDCCH, because a time-frequency resource carrying the PDCCH are limited, a case in which the terminal device fails to receive the DCI may occur.

As described above, the DMRS may be sent on a time-frequency resource carrying the PDSCH. The terminal device performs channel estimation on the PDSCH based on the received DMRS, to obtain channel estimation for different symbols on the PDSCH, so that the terminal device demodulates and decodes the PDSCH based on the channel estimation result.

Currently, it is proposed that DCI may be carried on a PDSCH for sending. Considering that the PDSCH is sent to a specific terminal device, if DCI to be sent to the terminal device is carried on the PDSCH, and a resource for receiving the DCI by the terminal device is in a specific time-frequency resource carrying the PDSCH, the terminal device only needs to demodulate and decode the DCI on the specific time-frequency resource without performing blind detection. However, how to determine, in the time-frequency resource carrying the PDSCH, the resource carrying the DCI to improve transmission performance of the DCI is a problem that urgently needs to be resolved.

In this case, this application proposes a control channel transmission method. In the method, when a DMRS is carried on a time-frequency resource carrying a PDSCH, a time-frequency resource carrying DCI in the time-frequency resource carrying the PDSCH may also be determined based on the time-frequency resource carrying the PDSCH or based on a time-frequency resource carrying the DMRS on the PDSCH. In this way, considering that the PDSCH is sent to a specific terminal device, a quantity of times that the terminal device detects the DCI can be reduced, thereby reducing power consumption of the terminal device. In addition, when the time-frequency resource carrying the DCI in the time-frequency resource carrying the PDSCH is determined based on the time-frequency resource carrying the PDSCH or the time-frequency resource carrying the DMRS on the PDSCH, a DCI resource for improving transmission performance of the DCI is determined by comprehensively considering a delay, channel estimation performance during channel estimation performed by using the DMRS, and complexity of the terminal device.

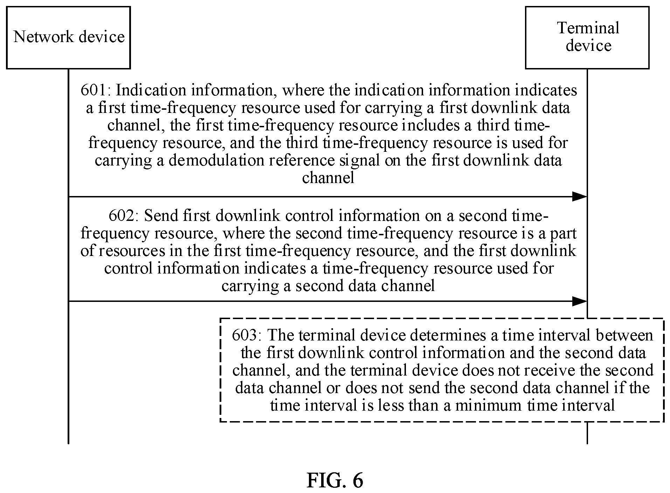

FIG. 6 is a schematic flowchart of a control information transmission method. The method includes the following procedures.

601: A network device sends indication information to a terminal device, where the indication information indicates a first time-frequency resource used for carrying a first downlink data channel, the first time-frequency resource includes a third time-frequency resource, and the third time-frequency resource is used for carrying a demodulation reference signal on the first downlink data channel. Correspondingly, the terminal device receives the indication information from the network device.

In this embodiment of this application, an example in which the terminal device is a UE and the network device is a radio access network device, for example, a base station, is used for description.

For example, the first downlink data channel is a first PDSCH, and the first time-frequency resource is a time-frequency resource carrying the first PDSCH.

That the base station sends the indication information to the UE includes: The base station sends DCI to the UE, where the DCI includes the indication information. For example, the indication information indicates an offset K0, a start symbol S, and a quantity L of consecutive symbols of the first time-frequency resource in time domain relative to a slot of a PDCCH. In some embodiments, if a subcarrier spacing of the PDCCH is the same as a subcarrier spacing of the first PDSCH, K0=0 indicates that the first PDSCH and the PDCCH are scheduled in a same slot, and K0=1 indicates that the first PDSCH is scheduled in a next slot of a slot of the PDCCH. Alternatively, that the base station sends the indication information to the UE includes: The base station sends higher-layer information to the UE, where the higher-layer information includes the indication information.

If the indication information is included in the DCI, the DCI may be first-stage DCI in two-stage DCI, or may be conventional one-stage DCI. This is not limited in this application. The two-stage DCI includes the first-stage DCI and second-stage DCI. The first-stage DCI indicates receiving information of the second-stage DCI. For example, the first-stage DCI indicates a receiving resource of the second-stage DCI or a quantity of information bits in the second-stage DCI. In some embodiments, the first-stage DCI and the second-stage DCI are used for scheduling data transmission in a first cell. The first-stage DCI and the second-stage DCI are not completely the same. Data transmission in the first cell cannot be performed only based on the first-stage DCI, and data transmission in the first cell cannot be performed only based on the second-stage DCI either. The first-stage DCI and the second-stage DCI are further used for scheduling data transmission in a second cell. The second cell is different from the first cell.

In some embodiments, the first-stage DCI and the second-stage DCI are not completely the same. Data transmission on a first carrier cannot be performed only based on the first-stage DCI, and data transmission on the first carrier cannot be performed only based on the second-stage DCI either. The first-stage DCI and the second-stage DCI are further used for scheduling data transmission on a second carrier. The second carrier is different from the first carrier. The first carrier and the second carrier may be an uplink carrier and a downlink carrier of a same cell, or may be uplink carriers of different cells, or may be downlink carriers of different cells.

602: The network device sends first downlink control information to the terminal device on a second time-frequency resource, where the second time-frequency resource is a part of resources in the first time-frequency resource, and the first downlink control information indicates a time-frequency resource used for carrying a second data channel. Correspondingly, the terminal device receives the first downlink control information from the network device on the second time-frequency resource.

The second time-frequency resource is determined based on an initial symbol of the first time-frequency resource, or the second time-frequency resource is determined based on the third time-frequency resource.

In some embodiments, the network device may determine the second time-frequency resource based on the first time-frequency resource, or determine the second time-frequency resource based on the first time-frequency resource and the third time-frequency resource carrying the DMRS on the first PDSCH. Then, the network device sends the first DCI to the terminal device on the second time-frequency resource.

Correspondingly, after receiving the indication information, the terminal device may determine the second time-frequency resource based on the first time-frequency resource, or determine the second time-frequency resource based on the first time-frequency resource and the third time-frequency resource carrying the DMRS on the first PDSCH. Then, the terminal device receives, on the second time-frequency resource, the first DCI sent by the network device.

The first DCI is used for scheduling an uplink channel or a downlink channel or for scheduling an uplink signal or a downlink signal. When the first DCI indicates the time-frequency resource used for carrying the second data channel, and when the second data channel is an uplink channel, the uplink channel may be a PUSCH; or when the second data channel is a downlink channel, the downlink channel may be a PDSCH. The uplink signal may be a channel state information-reference signal (channel state information-reference signal, CSI-RS), and the downlink signal may be a sounding reference signal (sounding reference signal, SRS).

For the network device, that the network device determines the second time-frequency resource may occur before the network device sends the indication information, or may occur after the network device sends the indication information.

The first DCI may be the conventional one-stage DCI or the second-stage DCI in the two-stage DCI. When the first DCI is the second-stage DCI in the two-stage DCI, first-stage DCI corresponding to the first DCI is DCI including the indication information.

In this way, for the terminal device, considering that the PDSCH is sent to a specific terminal device, if the second time-frequency resource carrying the DCI is determined in the first time-frequency resource carrying the PDSCH, that a large quantity of blind detections of the DCI received on blindly detected PDCCH candidates by the terminal device can be avoided, thereby reducing power consumption of the terminal device. In addition, when the second time-frequency resource carrying the DCI in the first time-frequency resource is determined based on the first time-frequency resource carrying the PDSCH or the first time-frequency resource carrying the PDSCH and the third time-frequency resource carrying the DMRS on the PDSCH, a DCI resource for improving transmission performance of the DCI may be determined by comprehensively considering a delay, channel estimation performance during channel estimation performed by using the DMRS, and complexity of the terminal device.

In the following descriptions, manners of determining, in the first time-frequency resource, the second time-frequency resource carrying the first DCI are applicable to the network device and the terminal device.

In some embodiments, there are N groups of demodulation reference signals in the demodulation reference signal on the first downlink data channel, where N is a positive integer. A time domain resource of the third time-frequency resource is N groups of symbols, and an n^{th} group of demodulation reference signals in the N groups of demodulation reference signals is carried on an n^{th} group of symbols in the N groups of symbols; and any group of the N groups of symbols consists of one symbol or two consecutive symbols, and when N is greater than or equal to 2, any two groups of the N groups of symbols are not consecutive in time domain, where n is a positive integer greater than or equal to 1 and less than or equal to N.

In other words, when there are N groups of DMRSs in the DMRS on the first PDSCH, the time domain resource of the third time-frequency resource is the N groups of symbols. For example, refer to FIG. 2. When dmrs-AdditionalPosition is pos 1 in a single-symbol mode of the DMRS on the first PDSCH, there are two groups of DMRSs in the DMRS on the first PDSCH, the time domain resource of the third time-frequency resource is two groups of symbols, a 1^{st} group of DMRSs is carried on a 1^{st} group of symbols (a symbol 2), a 2^{nd} group of DMRSs is carried on a 2^{nd} group of symbols (a symbol 11), and the 1^{st} group of symbols and the 2^{nd} group of symbols are not consecutive in time domain. Similarly, when dmrs-AdditionalPosition is pos 1 in a double-symbol mode of the DMRS on the first PDSCH, for example, a 1^{st} group of DMRSs is carried on a 1^{st} group of symbols (a symbol 2 and a symbol 3), a 2^{nd} group of DMRSs is carried on a 2^{nd} group of symbols (a symbol 11 and a symbol 12), and the 1^{st} group of symbols and the 2^{nd} group of symbols are not consecutive in time domain.

A plurality of implementations of determining, in the first time-frequency resource, the second time-frequency resource carrying the first DCI are described below by using examples.

Manner 1: The first DCI may be carried on M consecutive symbols starting from a specific symbol on the first PDSCH.

In some embodiments, the second time-frequency resource is a part or all of time-frequency resources on each of M symbols starting from the initial symbol of the first time-frequency resource, where M is an integer greater than or equal to 1. In other words, on any one of the M symbols, a frequency domain range of the second time-frequency resource is less than or equal to a frequency domain range of the first time-frequency resource.

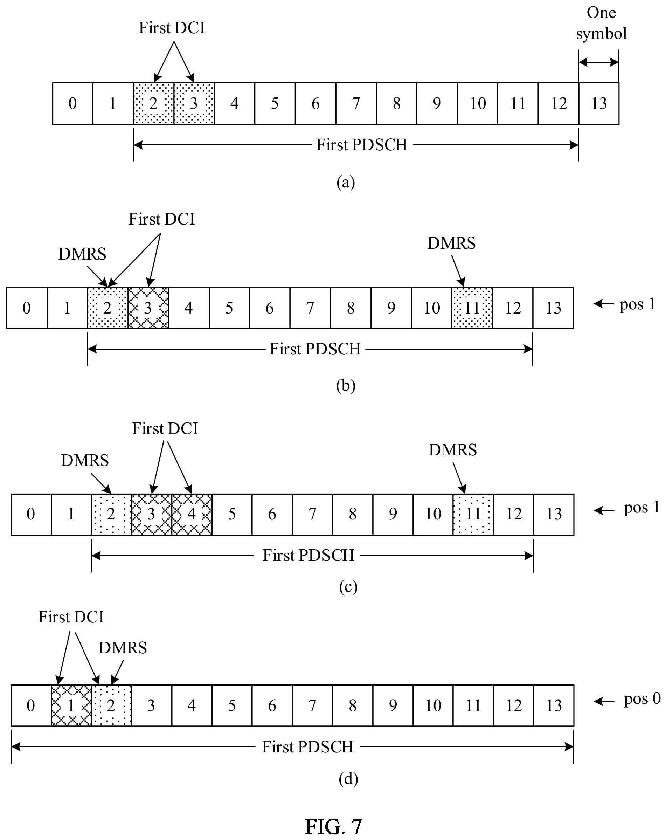

It is assumed that a mapping type of the first PDSCH is a mapping type A, the indication information indicates that in time domain information of the first PDSCH, a start symbol S=2, a quantity L of consecutive symbols=11, and the second time-frequency resource used for carrying the first DCI is a part or all of time-frequency resources on each of M symbols starting from the symbol 2. (a) in FIG. 7 is a diagram of the second time-frequency resource in the first time-frequency resource carrying the first PDSCH. For example, when M is 2 and no DMRS is carried on the symbol 2, the second time-frequency resource used for carrying the first DCI is two symbols starting from the symbol 2, to be specific, all time-frequency resources on the symbol 2 and a part or all of time-frequency resources on a symbol 3. In this case, in the third time-frequency resource shown in FIG. 2, if the DMRS is transmitted on the symbol 2, but the DMRS occupies a part of time-frequency resources on the symbol 2, remaining resources on the symbol 2 may be used for carrying the first DCI, and the second time-frequency domain resource used for carrying the first DCI may be a part of time-frequency resources on the symbol 2 and a part or all of time-frequency resources on the symbol 3.

In this way, when the first DCI is carried on the first PDSCH, if the first DCI starts to be sent from an initial symbol of the first PDSCH resource, a delay of receiving the first DCI by the UE is small.

In some embodiments, the second time-frequency resource is a part or all of time-frequency resources, in the first time-frequency resource, on each of M symbols starting from an initial symbol in the N groups of symbols.

(b) in FIG. 7 is a diagram of the second time-frequency resource. It is assumed that dmrs-AdditionalPosition configured by a higher layer is pos 1, and in the first time-frequency resource carrying the first PDSCH, the initial symbol is a symbol 2, the N groups of symbols carrying the DMRSs are two groups of symbols, one group of symbols is the symbol 2, and the other group of symbols is a symbol 11. In this case, the second time-frequency resource carrying the first DCI is a part or all of time-frequency resources on each of M symbols starting from the symbol 2. For example, when M=2, the second time-frequency resource carrying the first DCI is two symbols starting from the symbol 2, to be specific, a part or all of time-frequency resources on the symbol 2 and a symbol 3. Herein, if on the symbol 2, the DMRS does not fully occupy all of time-frequency resources on the symbol 2, the first DCI may occupy a part of time-frequency resources on the symbol 2 and a part or all of the time-frequency resources on the symbol 3.

In this way, considering that channel estimation quality on a symbol on which the DMRS is located is ensured to some extent, it is ensured that a delay of the first DCI is small, and channel estimation performance of receiving the first DCI by the UE can also be improved.

In some embodiments, the second time-frequency resource is a part or all of time-frequency resources, in the first time-frequency resource, on each of M symbols starting from an initial symbol after an initial group of symbols in the N groups of symbols.

(c) in FIG. 7 is a diagram of the second time-frequency resource. It is assumed that dmrs-AdditionalPosition configured by a higher layer is pos 1, and in the first time-frequency resource carrying the first PDSCH, the initial symbol is a symbol 0, the N groups of symbols carrying the DMRSs are two groups of symbols, one group of symbols is a symbol 2, and the other group of symbols is a symbol 11. In this case, the second time-frequency resource carrying the first DCI is a part or all of time-frequency resources on each of M symbols starting from a symbol 3 after the symbol 2. For example, when M is 2, the second time-frequency resource carrying the first DCI is a part or all of time-frequency resources on the symbol 3 and a symbol 4.

This considers a case in which the base station and the UE avoid performing resource mapping of the first DCI by using the DMRS when transmission of the first DCI occupies a symbol on which the DMRS is located, causing high implementation complexity of the base station and the UE If the first DCI starts to be transmitted on the initial symbol after the initial group of symbols in the N groups of symbols carrying the DMRSs, a compromise may be made between a delay of the first DCI, channel estimation performance of the first DCI, and implementation complexity.

Manner 2: When N is 1, the second time-frequency resource is a part or all of time-frequency resources, in the first time-frequency resource, on M symbols that are closest to the N groups of symbols in time domain. In other words, on any one of the M symbols, a frequency domain range of the second time-frequency resource is less than or equal to a frequency domain range of the first time-frequency resource.

In other words, if only one group of symbols of the first time-frequency resource carrying the first PDSCH is used for carrying the DMRS, the second time-frequency resource carrying the first DCI may be a part or all of time-frequency resources on M symbols that are closest to the group of symbols in time domain.

For example, (d) in FIG. 7 is a diagram of the second time-frequency resource. It is assumed that a start symbol of the first time-frequency resource carrying the first PDSCH is a symbol 0, a length of the first time-frequency resource is 14, and only one group of symbols of the first time-frequency resource is used for carrying the DMRS, that is, in a case of pos 0. In this case, when the group of symbols is a symbol 2, a part or all of time-frequency resources on the symbol 2 and M symbols that are closest to the symbol 2 in time domain may be selected. For example, when M is 2, a part or all of time-frequency resources on the symbol 2 and a symbol 1 may be selected to carry the first DCI (as shown in (d) in FIG. 7), or a part or all of time-frequency resources on the symbol 2 and a symbol 3 may be selected to carry the first DCI. Alternatively, a part or all of time-frequency resources on the symbol 1 and the symbol 3 may be selected to carry the first DCI. A specific manner of selecting, based on an order of distances from the DMRS symbol, a symbol to carry the first DCI may be configured by a higher layer.

In this way, considering that when only one group of symbols of the first time-frequency resource carrying the first PDSCH is used for carrying the DMRS, channel estimation quality of the symbol carrying the DMRS is the best, and as distances from the group of symbols increase, channel estimation quality degrades. If the UE selects a part or all of time-frequency resources on M symbols that are closest to the group of symbols in time domain to carry the first DCI, channel estimation performance of the first DCI can be improved, thereby improving data transmission efficiency on a UE side.

Manner 3: When N is greater than or equal to 2, the second time-frequency resource is a part or all of time-frequency resources, in the first time-frequency resource, on M symbols that are closest to a second symbol in time domain. In other words, on any one of the M symbols, a frequency domain range of the second time-frequency resource is less than or equal to a frequency domain range of the first time-frequency resource. The second symbol is a symbol between an initial group of symbols and a first symbol in the N groups of symbols, the first symbol is an initial symbol in a group of symbols in the N groups of symbols other than the initial group of symbols, and the second symbol and the initial group of symbols are not consecutive in time domain.

In other words, if in the first time-frequency resource carrying the first PDSCH, at least two groups of symbols are used for carrying DMRSs, the second time-frequency resource carrying the first DCI may be determined from a PDSCH symbol between the two groups of symbols.

Herein, a plurality of possibilities of the first symbol are described by using examples.

In some embodiments, the first symbol is an initial symbol in a last group of symbols in the N groups of symbols.

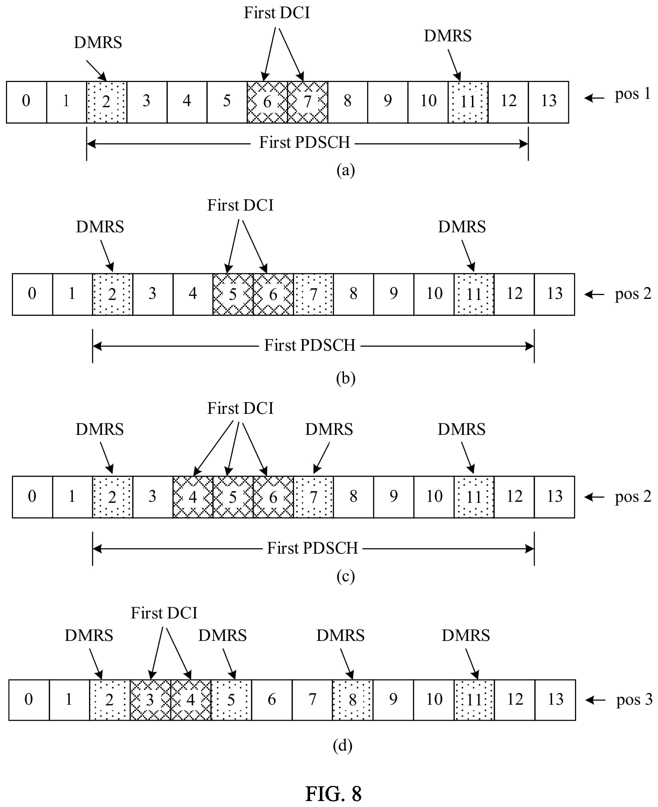

For example, (a) in FIG. 8 is a diagram of the second time-frequency resource. It is assumed that dmrs-AdditionalPosition configured by a higher layer is pos 1. In the first time-frequency resource carrying the first PDSCH (where a start symbol is 2, and a length is 11), if the DMRS is in a single-symbol mode, the N groups of symbols carrying the DMRSs are two groups of symbols, one group of symbols is a symbol 2, the other group of symbols is a symbol 11, and the first symbol is the symbol 11. Alternatively, for a case that is not shown in (a) in FIG. 8, if the DMRS is in a double-symbol mode, a first group of symbols are a symbol 2 and a symbol 3, the other group of symbols is a symbol 11 and a symbol 12, and the first symbol is the symbol 11.

For the DMRS in the single-symbol mode shown in (a) in FIG. 8, the second symbol is a symbol between the symbol 2 and the symbol 11, and the second symbol and the symbol 2 are not consecutive in time domain. The second symbol may be one of a symbol 4 to a symbol 10. In consideration of a case of pos 1, when channel estimation is obtained through interpolation of the symbol 2 and the symbol 11, channel estimation quality of the symbol 6 and the symbol 7 between the symbol 2 and the symbol 11 is the best, and the second symbol may be the symbol 6 or the symbol 7. The second time-frequency resource is a part or all of time-frequency resources, in the first time-frequency resource carrying the first PDSCH, on M symbols that are closest to the symbol 6 or the symbol 7 in time domain. For example, when the second symbol is the symbol 6, if M=2, the first DCI may be carried on a part or all of time-frequency resources on the symbol 6 and the symbol 7 (as shown in (a) in FIG. 8) or carried on a part or all of time-frequency resources on the symbol 5 and the symbol 6.

Optionally, for the plurality of implementations of determining the second time-frequency resources in the foregoing examples, the part or all of time-frequency resources on the symbol 5 and the symbol 6 may be preferentially selected as the second time-frequency resource, so that a delay of the first DCI can be small, and channel estimation quality of the first DCI is good when channel estimation for the first DCI is obtained through DMRS interpolation.

(b) in FIG. 8 is a diagram of the second time-frequency resource. It is assumed that dmrs-AdditionalPosition configured by a higher layer is pos 2. When the DMRS is in a single-symbol mode shown in (b) in FIG. 8, in the first time-frequency resource carrying the first PDSCH, the N groups of symbols carrying the DMRSs are three groups of symbols, a first group of symbols is a symbol 2, a second group of symbols is a symbol 7, a third group of symbols is a symbol 11, and the first symbol is the symbol 11. The second symbol may be a symbol between the symbol 2 and the symbol 11, and the second symbol and the symbol 2 are not consecutive in time domain. For example, the second symbol may be one of a symbol 4 to a symbol 10. Considering that when channel estimation is obtained through interpolation of channel estimation for the DMRSs, channel estimation quality of a center symbol between DMRS symbols is good. It is assumed that M=2. In this case, the second time-frequency resource may be selected from, for example, a part or all of time-frequency resources on the symbol 5 and the symbol 6 (as shown in (b) in FIG. 8). In this way, symbols occupied by the first DCI are consecutive, and channel estimation for the symbol 5 and the symbol 6 may be obtained through interpolation of channel estimation for DMRSs on the symbol 2, the symbol 7, and the symbol 11. Alternatively, a part or all of time-frequency resources on the symbol 8 and the symbol 9 are selected, or a part or all of time-frequency resources on the symbol 6 and the symbol 8 are selected. Alternatively, if the first DCI can occupy the DMRS symbol, and there are remaining time-frequency resources on the symbol 7, a part or all of time-frequency resources on the symbol 6 and a part of the remaining time-frequency resources on the symbol 7 may be selected.

Optionally, for the plurality of implementations of determining the second time-frequency resources in the foregoing examples, the part or all of time-frequency resources on the symbol 5 and the symbol 6 may be preferentially selected as the second time-frequency resource, so that a delay of the first DCI can be small.

In this way, when the second time-frequency resource carrying the first DCI is between an initial group of symbols and a last group of symbols that carry DMRSs, considering that when the UE obtains channel estimation for the first DCI through interpolation of channel estimation for the DMRSs, channel estimation quality of the center symbol between the DMRS symbols is good, so that channel estimation performance of the first DCI obtained by the UE can be improved.

In some embodiments, the first symbol is an earliest symbol in time domain that can meet the following condition: A time-frequency resource that is between the initial group of symbols and the first symbol and that can be used for carrying the first downlink control information is greater than or equal to a time-frequency resource required by the first downlink control information.

In this manner, the base station or the UE first determines a size of the time-frequency resource required by the first DCI, for example, determines a quantity of resource elements (resource elements, REs) required by the first DCI. Then, the first symbol is determined, and the first symbol may be understood as an earliest DMRS symbol that can ensure that the first DCI is carried between the initial group of symbols and the first symbol.

For example, (c) in FIG. 8 is a diagram of the second time-frequency resource. When the DMRS is in a single-symbol mode shown in (c) in FIG. 8, for a case of pos 2, the N groups of symbols are three groups of symbols, a first group of symbols is a symbol 2, a second group of symbols is a symbol 7, and a third group of symbols is a symbol 11. If it is determined, based on a quantity of REs of the first DCI, that the first DCI needs to occupy three complete symbols, that is, M=3, when no DMRS symbol is occupied, the first symbol may be the symbol 7. The second symbol may be a symbol 4, a symbol 5, or a symbol 6. The three symbols occupied by the second time-frequency resource may be, for example, the symbol 4, the symbol 5, and the symbol 6.

(d) in FIG. 8 is a diagram of the second time-frequency resource. When the DMRS is in a single-symbol mode shown in (d) in FIG. 8, for a case of pos 3, the N groups of symbols are four groups of symbols, a first group of symbols is a symbol 2, a second group of symbols is a symbol 5, a third group of symbols is a symbol 8, and a fourth group of symbols is a symbol 11. If it is determined, based on a quantity of REs of the first DCI, that the first DCI needs to occupy two complete symbols, that is, M=2, when no DMRS symbol is occupied, the first symbol may be the symbol 5, the second symbol may be a symbol 4, and the two symbols required by the first DCI are a symbol 3 and the symbol 4 (shown in (d) in FIG. 8). If it is determined, based on a quantity of REs of the first DCI, that the first DCI needs to occupy three complete symbols, that is, M=3, when no DMRS symbol is occupied, the first symbol may be the symbol 8, the second symbol may be a symbol 4, a symbol 6, or a symbol 7, and the three symbols required by the first DCI may be a symbol 3, the symbol 4, and the symbol 6 or the symbol 4, the symbol 6, and the symbol 7 (not shown in (d) in FIG. 8).

In some embodiments, the first symbol is a symbol in the N groups of symbols that is indicated by signaling or specified in a protocol.

For example, it is assumed that for the case of pos 2 in the single-symbol mode shown in (c) in FIG. 8, if the first symbol is specified as the symbol 7, and the M symbols required by the first DCI are three symbols, the second symbol is the symbol 4, the symbol 5, or the symbol 6, and the M symbols may be a symbol 3 to the symbol 5 or the symbol 4, the symbol 5 and the symbol 6. It is assumed that for the case of pos 2 in the single-symbol mode shown in (d) in FIG. 8, if the first symbol is specified as the symbol 5, and the M symbols required by the first DCI are two symbols, the second symbol is the symbol 4, and the M symbols may be the symbol 3 and the symbol 4. The base station needs to determine an encoding manner and a rate matching manner of the first DCI, to ensure that the first DCI can be carried on the initial group of symbols, to be specific, the symbol 3 and the symbol 4 between the symbol 2 and the symbol 5.

In this way, for the cases of pos 2 and pos 3, when the first DCI is carried between the initial group of symbols and the first symbol in the N groups of symbols, and when the first symbol is not a last symbol in the N groups of symbols, the UE may perform channel estimation for the first DCI by using channel estimation for a part of DMRSs on the first PDSCH, to ensure that channel estimation for the first DCI is obtained through interpolation of channel estimation for the DMRS. In this way, channel estimation quality of the first DCI obtained by the UE can be improved. In addition, when the UE performs channel estimation for the first DCI by using the part of DMRSs on the first PDSCH, a delay from the first DCI to a data channel scheduled by using the first DCI can be reduced.

In the plurality of implementations of determining the second time-frequency resource, the M symbols may be consecutive symbols in time domain or symbols in the consecutive symbols in time domain other than a first-type symbol.

The first-type symbol includes a time-frequency resource that cannot be used for transmitting the first DCI. Further, in the first time-frequency resource, the first-type symbol includes the time-frequency resource that cannot be used for transmitting the first DCI. To be specific, if a symbol of the first time-frequency resource includes the time-frequency resource that cannot be used for transmitting the first DCI, but a frequency domain resource of the time-frequency resource that cannot be used for transmitting the first DCI is not included in a frequency domain resource of the first time-frequency resource, the symbol is not the first-type symbol. If a symbol of the first time-frequency resource includes the time-frequency resource that cannot be used for transmitting the first DCI, and a frequency domain resource of the time-frequency resource that cannot be used for transmitting the first DCI is included in a frequency domain resource of the first time-frequency resource, the symbol is the first-type symbol. The first-type symbol includes at least one of the following: a symbol on which the indication information is located, a symbol in the N groups of symbols, or a symbol including a rate matching resource. Further, the first-type symbol is a symbol including the indication information, and/or a symbol in the N groups of symbols, and/or a symbol including a rate matching resource in the first time-frequency resource.

If the M symbols used for carrying the first DCI are consecutive symbols in time domain, for the base station and the UE, a delay of sending/receiving of the first DCI is small.

If the M symbols are symbols in the consecutive symbols in time domain other than the first-type symbol, where for example, it is assumed that the indication information indicates that the first time-frequency resource carrying the first PDSCH is 14 symbols in time domain: a symbol 0 to a symbol 11, the symbol 0 and the symbol 1 are used for carrying the indication information, the first time-frequency resource may be irregular, and the symbol 0 and the symbol 1 are not used for mapping the second time-frequency resource carrying the first DCI. If the symbol 0 and the symbol 1 are not used for carrying the indication information, or a CORESET that overlaps a time-frequency resource on which the first PDSCH is located does not include the indication information, the symbol 0 and the symbol 1 may be used for mapping the second time-frequency resource carrying the first DCI.

In this case, the base station and the UE may determine, when the terminal device reports that receiving of the first DCI on a CORESET carrying the indication information is not supported, that the first-type symbol includes the symbol on which the indication information is located. In other words, the UE may report a capability to the network device, to indicate whether receiving, on a CORESET carrying DCI, the first DCI carried on the first PDSCH is supported.

In addition, when determining the second time-frequency resource carrying the first DCI, the base station and the UE may skip symbols in the N groups of symbols carrying the DMRSs, in other words, the symbol carrying the DMRS is not used for mapping the second time-frequency resource carrying the first DCI. For example, as shown in (b) in FIG. 8, when the two symbols carrying the first DCI are consecutive in time domain, the part or all of time-frequency resources on the symbol 5 and the symbol 6 may be selected, or the part or all of time-frequency resources on the symbol 8 and the symbol 9 may be selected, or the part or all of time-frequency resources on the symbol 6 and the symbol 8 may be selected, but the part of time-frequency resources on the symbol 7 is not selected, in other words, the symbol 6 and the symbol 7 or the symbol 7 and the symbol 8 cannot be used as the two selected symbols.

In this case, the base station and the UE may determine, when the UE reports that receiving of the first DCI on the N groups of symbols is not supported, that the first-type symbol includes the symbol in the N groups of symbols. In other words, whether to receive the first DCI on the N groups of symbols is determined based on a capability of the terminal device.

In addition, if the M symbols do not include the symbol including the rate matching resource, the network device does not need to perform rate matching when sending the first DCI on the M symbols, and the terminal device does not need to perform rate matching either when receiving the first DCI on the M symbols, so that transmission efficiency of the first DCI is high, and the delay of the first DCI is small. For example, if the symbol carrying the first DCI is selected, according to the example in (a) in FIG. 8, sequence numbers are first incremented starting from the symbol 6 with the best channel estimation quality, and the symbol 6 and the symbol 7 may be selected. However, if the symbol 7 is a symbol on which rate matching needs to be performed, when the M symbols are consecutive in time domain, sequence numbers may alternatively be decremented starting from the symbol 6, and the symbol 5 and the symbol 6 are used for carrying the first DCI.

It should be noted that in the plurality of implementations of selecting the M symbols used for carrying the first DCI, during selection of the M symbols, the selection may not be performed in ascending order or descending order of sequence numbers of the symbols. However, after symbol selection is completed, the network device may send the first DCI in ascending order of the sequence numbers of the selected M symbols, and the terminal device also receives the first DCI in ascending order of the sequence numbers of the M symbols. For example, in the example in (d) in FIG. 7, when the two symbols selected for carrying the first DCI are the symbol 1 and the symbol 3, the symbol 3 may be first selected, and then the symbol 1 is selected. However, during sending of the first DCI, the first DCI is sent starting from the symbol 1 in ascending order of sequence numbers of the symbol 1 and the symbol 3.

In some embodiments, when receiving the first DCI and the DMRS on the first time-frequency resource carrying the first PDSCH, the terminal device may determine a part or all of DMRSs that are carried on the first time-frequency resource and that are used for channel estimation for the first DCI, to demodulate and decode the first DCI by using the part or all of DMRSs.

The following provides a plurality of possible implementations of how to determine the DMRS that is on the first time-frequency resource and that is used for performing channel estimation for the first DCI.

Manner A: Demodulation reference signals on the first downlink data channel that are carried on all symbol groups in the N groups of symbols are used for estimating a channel of all symbols of the second time-frequency resource.

In other words, DMRSs on the first PDSCH carried on all symbols in the N groups of symbols are used for estimating a channel of all symbols carrying the first DCI.

For example, in the manner of the second time-frequency resource shown in (a) in FIG. 8, the DMRSs occupy the two groups of symbols: the symbol 2 and the symbol 11, and the DMRSs carried on the symbol 2 and the symbol 11 are both used for estimating a channel of the symbol 6 and the symbol 7 that carry the first DCI.

In the manner of the second time-frequency resource shown in (b) in FIG. 8, when the DMRSs occupy the three groups of symbols, the symbol 2, the symbol 7, and the symbol 11 that correspond to the three groups of symbols are all used for estimating a channel of the symbol 5 and the symbol 6 that carry the first DCI.

In the manner of the second time-frequency resource shown in (d) in FIG. 8, when the DMRSs occupy the four groups of symbols and M=2, the symbol 2, the symbol 5, the symbol 8, and the symbol 11 that correspond to the four groups of symbols are all used for estimating a channel of the symbol 3 and the symbol 4 that carry the first DCI.

Considering that channel estimation for the first DCI is performed by using all DMRSs on the PDSCH, channel estimation quality obtained through interpolation is good. If channel estimation for all the symbols carrying the first DCI is obtained through interpolation, channel estimation quality of the first DCI is good. This helps the terminal device demodulate and decode the first DCI. In Manner A of performing channel estimation for the first DCI, when the first symbol is the initial symbol in the last group of symbols in the N groups of symbols, channel estimation quality of the obtained first DCI is good.

Manner B: When N is greater than or equal to 2,
in the N groups of symbols, demodulation reference signals on the first downlink data channel that are carried on an earliest symbol group after an end symbol of the second time-frequency resource and carried on all symbol groups before the earliest symbol group are used for estimating a channel of all symbols of the second time-frequency resource. Demodulation reference signals on the first downlink data channel that are carried on all symbol groups after the earliest symbol group are not used for estimating the channel of all the symbols of the second time-frequency resource.

For example, in the manner of the second time-frequency resource shown in (c) in FIG. 8, when the DMRSs occupy the three groups of symbols, although the three groups of symbols correspond to the symbol 2, the symbol 7, and the symbol 11, when the second time-frequency resource selected for carrying the first DCI is the symbol 4, the symbol 5, and the symbol 6, the end symbol of the second time-frequency resource is the symbol 6, an earliest symbol group after the symbol 6 is the symbol 7, and all symbol groups before the symbol 7 are the symbol 2. In this case, only DMRSs on the first PDSCH that are carried on the symbol 2 and the symbol 7 are used for estimating a channel of the symbol 4, the symbol 5, and the symbol 6.

In the manner of the second time-frequency resource shown in (d) in FIG. 8, when the DMRSs occupy the four groups of symbols, although the four groups of symbols correspond to the symbol 2, the symbol 5, the symbol 8, and the symbol 11, when the second time-frequency resource selected for carrying the first DCI is the symbol 3 and the symbol 4, the end symbol of the second time-frequency resource is the symbol 4, an earliest symbol group after the symbol 4 is the symbol 5, and all symbol groups before the symbol 5 are the symbol 2. In this case, only DMRSs on the first PDSCH that are carried on the symbol 2 and the symbol 5 are used for estimating a channel of the symbol 3 and the symbol 4.

This ensures that channel estimation for the first DCI is obtained through DMRS interpolation, so that channel estimation quality of the first DCI is good, and a small delay of channel estimation obtained through interpolation for the first DCI is also ensured.

Alternatively, in the N groups of symbols, demodulation reference signals on the first downlink data channel that are carried on a symbol group to which an end symbol of the second time-frequency resource belongs and carried on all symbol groups before the symbol group to which the end symbol of the second time-frequency resource belongs are used for estimating a channel of all symbols of the second time-frequency resource. Demodulation reference signals on the first downlink data channel that are carried on all symbol groups after the symbol group to which the end symbol of the second time-frequency resource belongs are not used for estimating the channel of all the symbols of the second time-frequency resource.

In other words, if the end symbol of the second time-frequency resource carrying the first DCI is a symbol in the N symbol groups, the DMRSs that are carried on the symbol group to which the end symbol belongs and carried on all the symbol groups before the symbol group are used for estimating the channel of all the symbols of the second time-frequency resource carrying the first DCI.

For example, it is assumed that in a DMRS carrying manner shown in (d) in FIG. 8, if the DMRS symbol can be selected to carry the first DCI, and the second time-frequency resource carrying the first DCI is the symbol 3, the symbol 4, and the symbol 5 (where the first DCI occupies a part of time-frequency resources on the symbol 5), the end symbol of the second time-frequency resource is the symbol 5. In this case, DMRSs on the first PDSCH that are carried on the symbol 5 and the symbol 2 are used for estimating a channel of all of the symbol 3, the symbol 4, and the symbol 5 of the second time-frequency resource carrying the first DCI.

Similarly, this ensures that channel estimation for the first DCI is obtained through interpolation of channel estimation for the DMRSs, so that channel estimation quality of the symbol carrying the first DCI is good, and a small delay of channel estimation obtained through interpolation for the symbol carrying the first DCI is also ensured.

Manner C: Among the N groups of symbols, demodulation reference signals on the first downlink data channel that are carried on all symbol groups preceding an end moment of an end symbol of the second time-frequency resource are used for estimating a channel of all symbols of the second time-frequency resource. Demodulation reference signals on the first downlink data channel that are carried on all symbol groups after all the symbol groups preceding the end moment of the end symbol of the second time-frequency resource are not used for estimating the channel of all the symbols of the second time-frequency resource.

For example, in the manner of the second time-frequency resource shown in (c) in FIG. 8, when the DMRSs occupy three groups of symbols, although the three groups of symbols correspond to the symbol 2, the symbol 7, and the symbol 11, when the second time-frequency resource selected for carrying the first DCI is the symbol 4, the symbol 5, and the symbol 6, the end symbol of the second time-frequency resource is the symbol 6, and all symbol groups preceding an end moment of the symbol 6 are the symbol 2. In this case, only a DMRS on the first PDSCH carried on the symbol 2 is used for estimating a channel of the symbol 4, the symbol 5, and the symbol 6.

In a DMRS carrying manner shown in (d) in FIG. 8, when the DMRSs occupy the four groups of symbols, although the four groups of symbols correspond to the symbol 2, the symbol 5, the symbol 8, and the symbol 11, when the second time-frequency resource selected for carrying the first DCI is the symbol 3, the symbol 4, and the symbol 6, the end symbol of the second time-frequency resource is the symbol 6, and all symbol groups preceding an end moment of the symbol 6 are the symbol 2 and the symbol 5. In this case, only DMRSs on the first PDSCH that are carried on the symbol 2 and the symbol 5 are used for estimating a channel of the symbol 3, the symbol 4, and the symbol 6.

In this way, if a DMRS symbol preceding an end moment of the first DCI is used for obtaining channel estimation for the symbol carrying the first DCI, for the terminal device, the DMRS symbol used for obtaining channel estimation for the symbol carrying the first DCI is received earlier than the first DCI, so that a delay of obtaining, by the UE, channel estimation for the symbol carrying the first DCI can be small, thereby improving demodulation and decoding efficiency of the first DCI by the terminal device.

In addition, as described above, as shown in FIG. 4, if a PDCCH carries DCI, and the DCI is used for scheduling a PDSCH, there is a minimum time interval between a start symbol on the PDSCH and an end symbol on the PDCCH, and the minimum time interval is related to a subcarrier spacing of the PDSCH and a subcarrier spacing of the PDCCH. As shown in FIG. 5, if a PDCCH carries DCI, and the DCI is used for scheduling a PUSCH, there is also a minimum time interval between a start symbol on the PUSCH and an end symbol on the PDCCH, and the minimum time interval is not less than *T_{proc,2}*. Similarly, in this application, when the DMRS and the first DCI are carried on the first PDSCH, considering that channel estimation for the first DCI is determined by using channel estimation for the DMRS on the first PDSCH, in this embodiment of this application, a minimum time interval between the first DCI and the data channel scheduled by using the first DCI may be further determined based on the symbol carrying the DMRS, so that the terminal device can complete, in the minimum time interval, channel estimation for the first DCI, demodulation and decoding of the first DCI, and transmission preparation for the data channel scheduled by using the first DCI.

Therefore, after step 602, FIG. 6 is a schematic flowchart of a control channel transmission method. The method in this embodiment of this application may further include the following steps.

603: The terminal device determines a time interval between the first downlink control information and the second data channel, and the terminal device does not receive the second data channel or does not send the second data channel if the time interval is less than a minimum time interval.

In other words, the terminal device does not expect the time interval between the first downlink control information and the second data channel to be less than the minimum time interval. However, when the terminal device receives the first downlink control information, and the time interval between the first downlink control information and the second data channel is less than the minimum time interval, the terminal device considers that the first downlink control information is invalid.

For example, if the first DCI carried on the first PDSCH is used for scheduling a PUSCH, and the UE determines that a time interval between the first DCI and the PUSCH scheduled by using the first DCI is less than the minimum time interval, the terminal device does not send the PUSCH. In this case, the UE does not need to perform PUSCH transmission preparation.

If the first DCI carried on the first PDSCH is used for scheduling a PDSCH, and the UE determines that a time interval between the first DCI and the PDSCH scheduled by using the first DCI is less than the minimum time interval, the terminal device does not receive the PDSCH.

In some scenarios, the first DCI carried on the first PDSCH may be further used for scheduling a CSI-RS. The minimum time interval determined in this application is further applicable to a minimum time interval between the first DCI and the CSI-RS. When the UE determines that a time interval between the first DCI and the CSI-RS is less than the minimum time interval, the UE does not receive the CSI-RS.

In some scenarios, the first DCI carried on the first PDSCH may be further used for scheduling an SRS. The minimum time interval determined in this application is further applicable to a minimum time interval between the first DCI and the SRS. When the UE determines that a time interval between the first DCI and the SRS is less than the minimum time interval, the UE does not send the SRS.

It is clear that in addition to being used for scheduling the PUSCH/PDSCH/CSI-RS/SRS, the first DCI in this application is further applicable to being used for scheduling another type of uplink channel/signal and another type of downlink channel/signal. Details are not described in this application.

In this application, the following provides examples of a plurality of possible implementations of how to determine, based on the third time-frequency resource carrying the DMRS, a minimum time interval between the first DCI and the PUSCH/PDSCH/CSI-RS/SRS scheduled by using the first DCI.

Manner a: A minimum time interval between an end symbol of the third time-frequency resource and a start symbol on the second data channel is a first time interval. The data channel may be replaced with a signal.

The first time interval is a minimum time interval between an end symbol carrying second DCI and a start symbol on a data channel scheduled by using the second DCI, and the second DCI is any piece of DCI carried on a physical downlink control channel. Herein, both the second data channel scheduled by using the first DCI and the data channel scheduled by using the second DCI are PDSCHs or PUSCHs. Alternatively, both a signal scheduled by using the first DCI and a data signal scheduled by using the second DCI are CSI-RSs or SRSs.

When both the second data channel scheduled by using the first DCI and the data channel scheduled by using the second DCI are PDSCHs, a subcarrier spacing of the second DCI is the same as a subcarrier spacing of the first DCI, and a subcarrier spacing of the PDSCH scheduled by using the second DCI is the same as a subcarrier spacing of the PDSCH scheduled by using the first DCI, the minimum time interval between the end symbol of the third time-frequency resource and the start symbol on the second data channel scheduled by using the first DCI is the same as the minimum time interval between the end symbol carrying the second DCI and the start symbol on the data channel scheduled by using the second DCI, and both the minimum time intervals are first time intervals.

For example, as shown in FIG. 4, the second DCI and the DMRS are carried on a PDCCH, the second DCI is used for scheduling a PDSCH, and the first time interval is *N_{pdsch}* PDCCH symbols shown in FIG. 4.

When both the second data channel scheduled by using the first DCI and the data channel scheduled by using the second DCI are PUSCHs, a subcarrier spacing of the second DCI is the same as a subcarrier spacing of the first DCI, a subcarrier spacing of the PUSCH scheduled by using the second DCI is the same as a subcarrier spacing of the PUSCH scheduled by using the first DCI, both a 1^{st} symbol on the PUSCH scheduled by using the second DCI and a 1^{st} symbol on the PUSCH scheduled by using the first DCI include only the DMRS or both the 1^{st} symbol on the PUSCH scheduled by using the second DCI and the 1^{st} symbol on the PUSCH scheduled by using the first DCI include only data, and neither the first DCI nor the second DCI triggers BWP switching, the minimum time interval between the end symbol of the third time-frequency resource and the start symbol on the data channel scheduled by using the first DCI is the same as the minimum time interval between the end symbol carrying the second DCI and the start symbol on the data channel scheduled by using the second DCI, and both the minimum time intervals are first time intervals.

For example, as shown in FIG. 5, the second DCI and the DMRS are carried on a PDCCH, the second DCI is used for scheduling a PUSCH, and the first time interval is *T_{proc,2}*.

In other words, when the second DCI is used for scheduling a PUSCH or a PDSCH, a first time interval corresponding to the PUSCH is different from a first time interval corresponding to the PDSCH.

In this application, if in addition to the DMRS, the first DCI is further carried on the first PDSCH, a minimum time interval between an end symbol carrying the DMRS carried on the first time-frequency resource and the start symbol on the data channel scheduled by using the first DCI is a first time interval.

The following example is described in cases in which both the second data channel scheduled by using the first DCI and the data channel scheduled by using the second DCI are PUSCHs, the subcarrier spacing of the second DCI is the same as the subcarrier spacing of the first DCI, the subcarrier spacing of the PUSCH scheduled by using the second DCI is the same as the subcarrier spacing of the PUSCH scheduled by using the first DCI, both the 1^{st} symbol on the PUSCH scheduled by using the second DCI and the 1^{st} symbol on the PUSCH scheduled by using the first DCI include only the DMRS or both the 1^{st} symbol on the PUSCH scheduled by using the second DCI and the 1^{st} symbol on the PUSCH scheduled by using the first DCI include only the data, and neither the first DCI nor the second DCI triggers BWP switching.

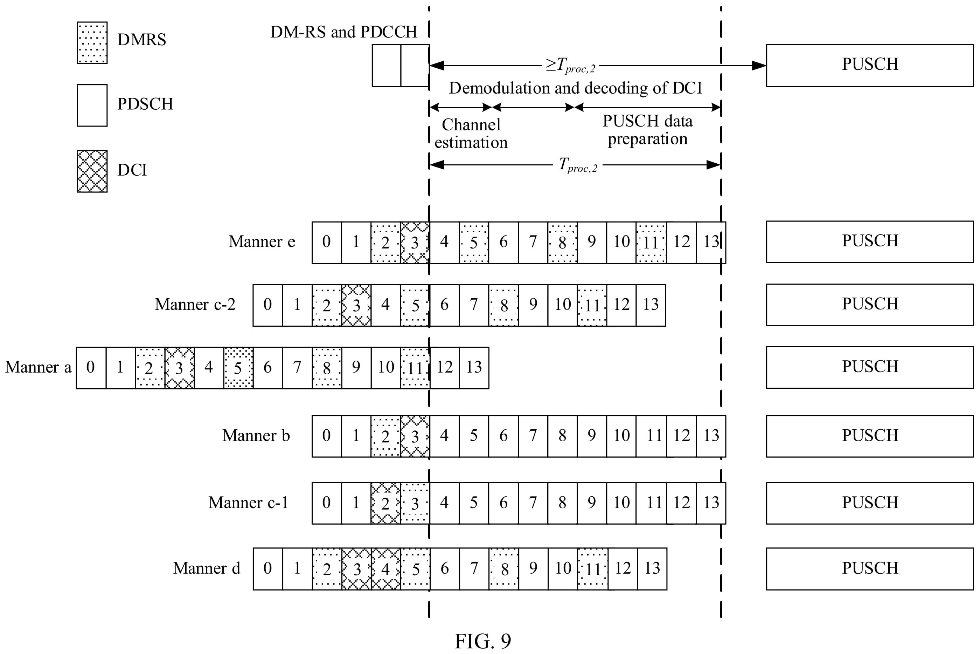

FIG. 9 is a diagram of a minimum time interval between the first DCI and the PUSCH when the first PDSCH carries the DMRS and the first DCI. For example, the first time interval is an existing definition of *T_{proc,2}*. In a case of pos 2 in a single-symbol mode shown in Manner a, when the third time-frequency resource carrying the first PDSCH has three groups of symbols, a last group of symbols is a symbol 11, and the second time-frequency resource carrying the first DCI is a symbol 3, a minimum time interval between the symbol 11 and a start symbol on the PUSCH scheduled by using the first DCI is the first time interval. In other words, the start symbol on the PUSCH scheduled by using the first DCI is not earlier than a moment corresponding to the first time interval that is after the end moment of the symbol 11. If a time interval between end time of the symbol 3 and start time of the PUSCH is less than the first time interval, the terminal device does not send the PUSCH.

This can ensure that channel estimation for the first DCI by the UE is obtained through interpolation of channel estimation for all DMRSs, so that channel estimation quality of the first DCI is good.

Manner b: If the end symbol of the second time-frequency resource is after an end symbol in the N groups of symbols, a minimum time interval between the end symbol of the second time-frequency resource and a start symbol on the second data channel is a first time interval.

As shown in FIG. 9, if the DMRS carried on the first PDSCH is pos 0, that is, the N groups of symbols of the third time-frequency resource carrying the DMRSs are one group of symbols, the group of symbols is a symbol 2, the second time-frequency resource carrying the first DCI occupies one symbol, and the symbol is a symbol 3, that is, end time of the second time-frequency resource is after end time of the N groups of symbols. In this case, a minimum time interval between end time of the symbol 3 carrying the first DCI and a start symbol (start moment) of the PUSCH scheduled by using the first DCI may be used as the first time interval. If a time interval between the end time of the symbol 3 and start time of the PUSCH is less than the first time interval, the terminal device does not send the PUSCH.

In this way, when the DMRS is pos 0, the UE may determine, based on channel estimation for the DMRS that is received before the first DCI, channel estimation for the symbol carrying the first DCI, thereby improving demodulation and decoding efficiency of the first DCI. In addition, this can ensure that channel estimation quality of the first DCI is good.

Manner c: If the end symbol of the second time-frequency resource is before the end symbol in the N groups of symbols, in the N groups of symbols, a minimum time interval between an end symbol in an earliest symbol group after the end symbol of the second time-frequency resource and the start symbol on the second data channel is the first time interval.

For example, in a manner c-1 shown in FIG. 9, if the DMRS carried on the first PDSCH is pos 0, that is, the N groups of symbols of the third time-frequency resource carrying the DMRSs are one group of symbols, assuming that the group of symbols is a symbol 3, the second time-frequency resource carrying the first DCI occupies one symbol, the symbol is a symbol 2, and end time of the symbol 2 carrying the first DCI is before the symbol 3 carrying the DMRS. In this case, a minimum time interval between an earliest symbol group after the symbol 2, that is, an end moment of the symbol 3, and the PUSCH scheduled by using the first DCI may be used as the first time interval. If a time interval between end time of the symbol 2 and start time of the PUSCH is less than the first time interval, the terminal device does not send the PUSCH.

Alternatively, in a manner c-2 shown in FIG. 9, if the DMRS carried on the first PDSCH is pos 3 and is in a single-symbol mode, the N groups of symbols of the third time-frequency resource carrying the DMRSs are four groups of symbols, the four groups of symbols are respectively a symbol 2, a symbol 5, a symbol 8, and a symbol 11, the second time-frequency resource carrying the first DCI occupies one symbol, and the symbol is a symbol 3. In this way, end time of the symbol 3 carrying the first DCI is before end time of the four groups of symbols (end time of the symbol 11). In this case, in the four groups of symbols, an earliest symbol group after the symbol 3 carrying the first DCI is the symbol 5, and a minimum time interval between end time of the symbol 5 and start time of the PUSCH scheduled by using the first DCI is the first time interval.

Manner d: If the end symbol of the second time-frequency resource is a symbol in the N groups of symbols, in the N groups of symbols, a minimum time interval between the start symbol on the second data channel and an end symbol in a symbol group that is in the N groups of symbols and that overlaps the end symbol of the second time-frequency resource is the first time interval.

For example, when the DMRS carried on the first PDSCH is pos 3 and is in a single-symbol mode, the N groups of symbols of the third time-frequency resource carrying the DMRSs are four groups of symbols, the four groups of symbols are respectively a symbol 2, a symbol 5, a symbol 8, and a symbol 11, the second time-frequency resource carrying the first DCI occupies one symbol, and the symbol is a symbol 3. When the second time-frequency resource carrying the first DCI needs three symbols, if a time-frequency resource that is between the initial group of symbols and the first symbol and that can be used for carrying the first DCI is greater than or equal to a time-frequency resource required by the first DCI, and the three symbols required by the second time-frequency resource include a symbol in the four groups of symbols, the second time-frequency resource carrying the first DCI is the symbol 3, a symbol 4, and the symbol 5. In this way, the end symbol of the second time-frequency resource belongs to the four groups of symbols. In the four groups of symbols, a symbol group that overlaps the end symbol 5 of the second time-frequency resource carrying the first DCI is the symbol 5, and a minimum time interval between end time of the symbol 5 and start time of the PUSCH scheduled by using the first DCI may be used as the first time interval. If a time interval between an end symbol carrying the first DCI, that is, the end time of the symbol 5, and the start time of the PUSCH is less than the first time interval, the terminal device does not send the PUSCH.

This can ensure that channel estimation for the first DCI is obtained through interpolation of channel estimation for the DMRS symbol, thereby improving channel estimation performance of the first DCI.

Manner e: When N is greater than or equal to 2, a minimum time interval between the end symbol of the second time-frequency resource and a start symbol on the second data channel is a first time interval plus preset duration.

For example, in Manner e shown in FIG. 9, if the DMRS carried on the first PDSCH is pos 3 and is in a single-symbol mode, the N groups of symbols of the third time-frequency resource carrying the DMRSs are four groups of symbols, the four groups of symbols are respectively a symbol 2, a symbol 5, a symbol 8, and a symbol 11, the second time-frequency resource carrying the first DCI occupies one symbol, and the symbol is a symbol 3. A minimum time interval between end time of the symbol 3 carrying the first DCI and start time of a start symbol on the PUSCH scheduled by using the first DCI may be the existing first time interval *T_{proc,2}* plus the preset duration. Based on a case of *T_{proc,2}* plus the preset duration, after receiving the first DCI, the UE can perform channel estimation, demodulation and decoding of the first DCI, and PUSCH data preparation, thereby improving PUSCH transmission efficiency.

In this way, in this application, when the DMRS and the DCI are carried on the PDSCH, the DMRS used for channel estimation may be considered, to determine a minimum time interval between the DCI and the PUSCH/PDSCH/CSI-RS, thereby improving transmission efficiency of scheduling the data channel or the CSI-RS by using the DCI.

It may be understood that to implement functions in the foregoing embodiments, the base station and the terminal include corresponding hardware structures and/or software modules for performing various functions. A person skilled in the art should be easily aware that, in this application, units and method steps in examples described with reference to embodiments disclosed in this application can be implemented by hardware or a combination of hardware and computer software. Whether a function is performed by hardware or hardware driven by computer software depends on particular application scenarios and design constraints of the technical solutions.

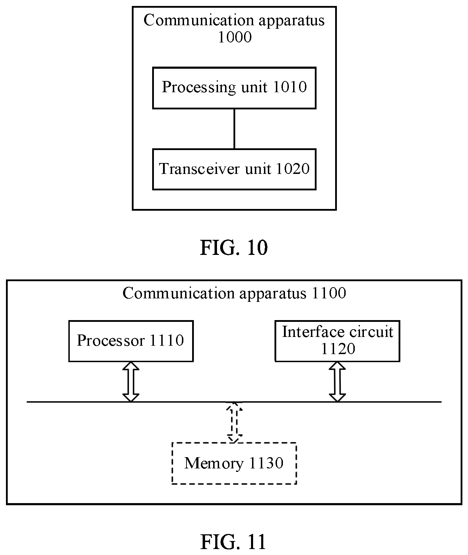

FIG. 10 and FIG. 11 are diagrams of possible structures of communication apparatuses according to embodiments of this application. These communication apparatuses may be configured to implement functions of the terminal or the base station in the foregoing method embodiments, and therefore can also implement beneficial effects of the foregoing method embodiments, In embodiments of this application, the communication apparatus may be the terminal 120 shown in FIG. 1, or may be the base station 110 shown in FIG. 1, or may be a module (for example, a chip) used in the terminal or the base station.

As shown in FIG. 10, a communication apparatus 1000 includes a processing unit 1010 and a transceiver unit 1020. The communication apparatus 1000 is configured to implement a function of the terminal or the base station in the method embodiment shown in FIG. 6.

When the communication apparatus 1000 is configured to implement the function of the terminal in the method embodiment shown in FIG. 6, the transceiver unit 1020 is configured to receive indication information and first downlink control information, and the processing unit 1010 is configured to process the indication information and the first downlink control information. The processing unit 1010 may be further configured to determine a time interval between the first downlink control information and a second data channel.

When the communication apparatus 1000 is configured to implement the function of the base station in the method embodiment shown in FIG. 6, the transceiver unit 1020 is configured to send indication information and first downlink control information, and the processing unit 1010 is configured to generate the indication information and the first downlink control information.

For more detailed descriptions of the processing unit 1010 and the transceiver unit 1020, refer to related descriptions in the method embodiment shown in FIG. 6.

As shown in FIG. 11, a communication apparatus 1100 includes a processor 1110 and an interface circuit 1120. The processor 1110 and the interface circuit 1120 are coupled to each other. It may be understood that the interface circuit 1120 may be a transceiver or an input/output interface. Optionally, the communication apparatus 1100 may further include a memory 1130 configured to store instructions executed by the processor 1110, or store input data required by the processor 1110 to run the instructions, or store data generated after the processor 1110 runs the instructions.

When the communication apparatus 1100 is configured to implement the method shown in FIG. 6, the processor 1110 is configured to implement a function of the foregoing processing unit 1010, and the interface circuit 1120 is configured to implement a function of the foregoing transceiver unit 1020.

When the communication apparatus is a chip used in a terminal, the chip in the terminal implements a function of the terminal in the foregoing method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station.

When the communication apparatus is a chip used in a base station, the chip in the base station implements a function of the base station in the foregoing method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. Alternatively, the processor and the storage medium may exist in the base station or the terminal as discrete components.

All or a part of the foregoing embodiments may be implemented by using software, hardware, firmware, or any combination thereof. When software is used for implementing the embodiments, all or a part of the embodiments may be implemented in a form of a computer program product. The computer program product includes one or more computer programs or instructions. When the computer program or the instructions are loaded and executed on a computer, all or a part of procedures or functions according to embodiments of this application are executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or if there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used for limiting the scope of embodiments of this application. Sequence numbers of the foregoing processes do not mean an execution order, and the execution order of the processes should be determined based on functions and internal logic of the processes.

## Claims

1. A control information transmission method, wherein the method comprises:
receiving indication information, wherein the indication information indicates a first time-frequency resource used for carrying a first downlink data channel, the first time-frequency resource comprises a third time-frequency resource, and the third time-frequency resource is used for carrying a demodulation reference signal on the first downlink data channel; and
receiving first downlink control information on a second time-frequency resource, wherein the second time-frequency resource is a part of resources in the first time-frequency resource, and the first downlink control information indicates a time-frequency resource used for carrying a second data channel; and
the second time-frequency resource is determined based on an initial symbol of the first time-frequency resource, or the second time-frequency resource is determined based on the third time-frequency resource.

2. A control information transmission method, wherein the method comprises:
sending indication information, wherein the indication information indicates a first time-frequency resource used for carrying a first downlink data channel, the first time-frequency resource comprises a third time-frequency resource, and the third time-frequency resource is used for carrying a demodulation reference signal on the first downlink data channel; and
sending first downlink control information on a second time-frequency resource, wherein the second time-frequency resource is a part of resources in the first time-frequency resource, and the first downlink control information indicates a time-frequency resource used for carrying a second data channel; and
the second time-frequency resource is determined based on an initial symbol of the first time-frequency resource, or the second time-frequency resource is determined based on the third time-frequency resource.

3. The method according to claim 1 or 2, wherein
there are N groups of demodulation reference signals in the demodulation reference signal on the first downlink data channel, wherein N is a positive integer;
a time domain resource of the third time-frequency resource is N groups of symbols, and an n^{th} group of demodulation reference signals in the N groups of demodulation reference signals is carried on an n^{th} group of symbols in the N groups of symbols; and
any group of the N groups of symbols consists of one symbol or two consecutive symbols, and when N is greater than or equal to 2, any two groups of the N groups of symbols are not consecutive in time domain, wherein n is a positive integer greater than or equal to 1 and less than or equal to N.

4. The method according to claim 3, wherein the second time-frequency resource is a part or all of time-frequency resources on each of M symbols starting from the initial symbol of the first time-frequency resource, wherein M is an integer greater than or equal to 1.

5. The method according to claim 3, wherein the second time-frequency resource is a part or all of time-frequency resources, in the first time-frequency domain resource, on each of M symbols starting from an initial symbol in the N groups of symbols, wherein M is an integer greater than or equal to 1.

6. The method according to claim 3, wherein the second time-frequency resource is a part or all of time-frequency resources, in the first time-frequency resource, on each of M symbols starting from an initial symbol after an initial group of symbols in the N groups of symbols, wherein M is an integer greater than or equal to 1.

7. The method according to claim 3, wherein when N is greater than or equal to 2, the second time-frequency resource is a part or all of time-frequency resources, in the first time-frequency resource, on M symbols that are closest to a second symbol in time domain, wherein M is an integer greater than or equal to 1; and
the second symbol is a symbol between an initial group of symbols and a first symbol in the N groups of symbols, the first symbol is an initial symbol in a group of symbols in the N groups of symbols other than the initial group of symbols, and the second symbol and the initial group of symbols are not consecutive in time domain.

8. The method according to claim 7, wherein the first symbol is an initial symbol in a last group of symbols in the N groups of symbols.

9. The method according to claim 7, wherein the first symbol is an earliest symbol in time domain that can meet the following condition:
a quantity of time-frequency resources that are between the initial group of symbols and the first symbol and that can be used for carrying the first downlink control information is greater than or equal to a quantity of time-frequency resource required by the first downlink control information.

10. The method according to claim 7, wherein the first symbol is a symbol in the N groups of symbols that is indicated by signaling or specified in a protocol.

11. The method according to claim 3, wherein when N is 1, the second time-frequency resource is a part or all of time-frequency resources, in the first time-frequency resource, on M symbols that are closest to the N groups of symbols in time domain.

12. The method according to any one of claims 4 to 11, wherein the M symbols are:
consecutive symbols in time domain or symbols in the consecutive symbols in time domain other than a first-type symbol; and
the first-type symbol comprises at least one of the following:
a symbol on which the indication information is located;
a symbol in the N groups of symbols; or
a symbol comprising a rate matching resource.

13. The method according to claim 12, wherein when a terminal device reports that receiving of the first downlink control information on the N groups of symbols is not supported, the first-type symbol comprises the symbol in the N groups of symbols.

14. The method according to claim 12 or 13, wherein when the terminal device reports that receiving of the first downlink control information on a control resource set carrying the indication information is not supported, the first-type symbol comprises the symbol on which the indication information is located.

15. The method according to any one of claims 1 to 14, wherein a minimum time interval between an end symbol of the third time-frequency resource and a start symbol on the second data channel is a first time interval.

16. The method according to any one of claims 3 to 14, wherein
if an end symbol of the second time-frequency resource is after an end symbol in the N groups of symbols, a minimum time interval between the end symbol of the second time-frequency resource and a start symbol on the second data channel is a first time interval;
if the end symbol of the second time-frequency resource is before the end symbol in the N groups of symbols, in the N groups of symbols, a minimum time interval between an end symbol in an earliest symbol group after the end symbol of the second time-frequency resource and the start symbol on the second data channel is the first time interval; or
if the end symbol of the second time-frequency resource is a symbol in the N groups of symbols, in the N groups of symbols, a minimum time interval between the start symbol on the second data channel and an end symbol in a symbol group that is in the N groups of symbols and that overlaps the end symbol of the second time-frequency resource is the first time interval.

17. The method according to any one of claims 3 to 10 and claims 12 to 14, wherein when N is greater than or equal to 2, a minimum time interval between an end symbol of the second time-frequency resource and a start symbol on the second data channel is a first time interval plus preset duration.

18. The method according to any one of claims 15 to 17, wherein
the first time interval is a minimum time interval between an end symbol of second downlink control information and a start symbol on a data channel scheduled by using the second downlink control information, and the second downlink control information is any piece of downlink control information carried on a physical downlink control channel.

19. The method according to any one of claims 3 to 18, wherein demodulation reference signals on the first downlink data channel that are carried on all symbol groups in the N groups of symbols are used for estimating a channel of all symbols of the second time-frequency resource.

20. The method according to any one of claims 3 to 10 and claims 12 to 18, wherein when N is greater than or equal to 2,
in the N groups of symbols, demodulation reference signals on the first downlink data channel that are carried on the earliest symbol group after the end symbol of the second time-frequency resource and carried on all symbol groups before the earliest symbol group are used for estimating a channel of all symbols of the second time-frequency resource; or
in the N groups of symbols, demodulation reference signals on the first downlink data channel that are carried on a symbol group to which the end symbol of the second time-frequency resource belongs and carried on all symbol groups before the symbol group to which the end symbol of the second time-frequency resource belongs are used for estimating the channel of all the symbols of the second time-frequency resource.

21. The method according to any one of claims 3 to 18, wherein in the N groups of symbols, demodulation reference signals on the first downlink data channel that are carried on all symbol groups preceding an end moment of the end symbol of the second time-frequency resource are used for estimating a channel of all symbols of the second time-frequency resource.

22. A communication apparatus, comprising a module configured to perform the method according to any one of claims 1 to 21.

23. A computer-readable storage medium, wherein the computer-readable storage medium stores computer instructions; and when the computer instructions are run on a communication apparatus, the communication apparatus is caused to perform the method according to any one of claims 1 to 21.

24. A computer program product, comprising computer instructions, wherein when the computer instructions are run on a communication apparatus, the communication apparatus is caused to perform the method according to any one of claims 1 to 21.
